(19) Europäisches Patentamt
European Patent Office
Office européen des brevets

(11) **EP 3 712 584 B1**

(12) **EUROPEAN PATENT SPECIFICATION**

(45) Date of publication and mention
of the grant of the patent:
**15.05.2024 Bulletin 2024/20**

(21) Application number: **20163869.9**

(22) Date of filing: **18.03.2020**

(51) International Patent Classification (IPC):
*G01L 5/00* (2006.01)     *B25J 9/16* (2006.01)
*G01L 5/22* (2006.01)     *G05B 13/02* (2006.01)
*G06N 3/08* (2023.01)

(52) Cooperative Patent Classification (CPC):
**G01L 5/009; B25J 9/1612; B25J 9/1692;
B25J 9/1694; G01L 5/226; G06N 3/045;
G06N 3/063;** G05B 2219/32192; G05B 2219/39058;
G05B 2219/39532; G05B 2219/40625; G06N 3/008

(54) **FORCE ESTIMATION USING DEEP LEARNING**

KRAFTSCHÄTZUNG MITTELS TIEFENLERNEN

ESTIMATION DE FORCE UTILISANT UN APPRENTISSAGE PROFOND

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2019 US 201916358485**

(43) Date of publication of application:
**23.09.2020 Bulletin 2020/39**

(73) Proprietor: **Nvidia Corporation
Santa Clara, CA 95051 (US)**

(72) Inventors:
• **Birchfield, Stan
Santa Clara, CA, 95051 (US)**
• **Boots, Byron
Santa Clara, CA, 95051 (US)**
• **Fox, Dieter
Santa Clara, CA, 95051 (US)**
• **Handa, Ankur
Santa Clara, CA, 95051 (US)**
• **Ratliff, Nathan
Santa Clara, CA, 95051 (US)**
• **Sundaralingam, Balakumar
Santa Clara, CA, 95051 (US)**
• **Lambert, Alexander
Santa Clara, CA, 95051 (US)**

(74) Representative: **Kraus & Lederer PartGmbB
Thomas-Wimmer-Ring 15
80539 München (DE)**

(56) References cited:
**WO-A1-2019/032814     WO-A1-2019/045779
US-A1- 2011 029 470**

• **Costanzo Marco ET AL: "Design and Calibration
of a Force/Tactile Sensor for Dexterous
Manipulation", Sensors, vol. 19, no. 4, 25
February 2019 (2019-02-25), page 966,
XP093050981, DOI: 10.3390/s19040966**

## Description

BACKGROUND

Robotic systems are being used to perform increasingly complex and subtle tasks. An important part of being able to perform many subtle tasks is the ability to adjust the control of the robot based on sensory feedback. For example, many kitchen tasks such as opening a sugar box, pouring into a container, or flipping a pancake require precise force observation for successful execution. By having a way to estimate the force from tactile signals, these tasks could be learned quicker. In another example, when handling soft or compliant objects, tactile force sensing allows the robot to adjust its actions based on changes to the object. Sophisticated tactile sensors, such as the SynTouch BioTac, provide a soft flesh-like compliant gripping surface that is able to handle delicate objects without damage. WO 2019/032814 A1 discloses systems and methods for teaching a robot. One such system may include a wearable device having a plurality of sensors for sensing signals representing at least one movement, orientation, position, force, and torque of any part of a user's body applied on a target. The system further includes a processing device configured to receive the sensed signals, the processing device further configured to store the sensed signals defining as data of teaching commands, a controller for controlling a robot receives the data of teaching commands and operates the robot according to the received data of teaching commands, an object sensor to detect position and orientation of an object as a workpiece of the robot, and a visual input device communicatively coupled to at least one of the processing device and the controller, wherein the visual input device configured to generate a visual view to the user a task performed by the robot in relation to the object, and visually correct the robot during operation of the robot and override the data of teaching commands received by controller. Non-patent literature - Costanzo M, De Maria G, Natale C, Pirozzi S. Design and calibration of a force/tactile sensor for dexterous manipulation. Sensors. 2019 Feb 25; 19(4):966. discloses a detailed design and experimental characterization of a force/tactile sensor able to measure distributed contacts and estimate contact force and torsional moments to be used for robotic dexterous manipulation tasks. The mechanical interface of the device is a soft pad of silicone so as to adapt to different object shapes and hold high torsional moments. The sensitive part, based on optoelectronic technology, is exploited not only to estimate the total contact wrench but also to detect the orientation of the contact surface essential to correctly detect friction force, a relevant quantity in any dexterous manipulation control algorithm. However, the nature of the sensor makes it difficult to estimate the force exerted by the tactile sensor. Without accurate force estimates, successful performance of many tasks is significantly difficult. Therefore it is important to provide a system that estimates force on a tactile sensor in a way that is accurate in both magnitude and direction, over a wide range of forces.

BRIEF DESCRIPTION OF THE DRAWINGS

Various techniques will be described with reference to the drawings, in which:

FIG. 1 illustrates an example of a robotic hand instrumented with tactile force sensors, in an embodiment;

FIG. 2 illustrates an example of a tactile force sensor, in an embodiment;

FIG. 3 illustrates an example of a process that trains a tactile force model for estimating the force on a tactile force sensor, in an embodiment;

FIG. 4 illustrates an example of force prediction neural network, in an embodiment;

FIG. 5 illustrates an example of a test fixture that measures a force applied to a tactile force sensor;

FIG. 6 illustrates an example of a test fixture that measures a force resulting from the manipulation of a ball;

FIG. 7 illustrates an example of a test fixture that measures a force resulting from pushing an object on a planar surface, in an embodiment;

FIG. 8 illustrates an example of a process that, as a result of being performed by a computer system, generates a tactile force model that estimates the force on a tactile force sensor, in an embodiment;

FIG. 9 illustrates an example of a process that, as a result of being performed by computer system, determines the force on a tactile force sensor based on movement of an object manipulated by the sensor, in an embodiment;

FIG. 10 illustrates an example of parallel processing unit ("PPU"), in accordance with an embodiment;

FIG. 11 illustrates an example of a general processing cluster ("GPC"), in accordance with one embodiment;

FIG. 12 illustrates an example of a streaming multi-processor, in accordance with one embodiment; and

FIG. 13 illustrates a computer system in which the various examples can be implemented, in accordance with one embodiment.

DETAILED DESCRIPTION

The present document describes a system that calibrates a tactile force sensor for use in a robotic system. In an embodiment, a probe, claw, gripper, or mechanical hand is instrumented with a collection of tactile force sensors that allow the control system to receive the signal that represents the force exerted on the sensor. In an embodiment, the tactile force sensor provides a plurality of force measurements distributed over the surface of the force sensor that provide an indication of force direction as well as force magnitude. In an embodiment, the tactile force sensor is coated with a soft pliable surface such as silicone that allows the surface of the sensor to conform to an object being manipulated.
In an embodiment, a number of test fixtures are used to collect calibration information for the tactile force sensor. In an embodiment, the back of the tactile force sensor is fixed to a pressure sensor, and objects are pressed against the force sensor. In an embodiment, as a result of pressing an object against the force sensor, signals are generated by the tactile force sensor, and the amount of force generated is recorded by the pressure sensor. In a comparative example not forming part of the invention, a robotic hand equipped with a tactile force sensor is used to manipulate a ball which is connected to a calibrated force sensor. In a comparative example not forming part of the invention, as the ball is manipulated, the signals received by the tactile force sensor are associated with a corresponding force measured by the calibrated force sensor. In an embodiment, a probe instrumented with a tactile force sensor is used to push an object on a planar surface, and the motion of the object is measured. In an embodiment, a physical model for the object is determined allowing the force exerted on the object to be estimated based on motion of the object. In an embodiment, the estimated force and the signal received from the tactile force sensor are used to calibrate the tactile force sensor.
In an embodiment, the information received from the test fixtures is used as training data for neural network. In an embodiment, the neural network learns a tactile force model that can be used to translate signals provided by the tactile force sensor into a force magnitude and direction. In an embodiment, by training with ground truth from a variety of different test fixtures as described above, the tactile force model may be used to estimate the force exerted by the tactile force sensor for a variety of tasks other than the training tasks described above. In an embodiment, the system uses a voxelized input feature layer for spatial signals and leverages information about the sensor surface to regularize a loss function. In an embodiment, the generated tactile force model has been shown to generate a median angular accuracy of 0.06 radians and a median magnitude accuracy of 0.06 N on a test data set. In an embodiment, the tactile force model is validated by performing object lifting and placement tasks, since lifting tasks tend to fail if force estimation is poor and placement tasks tend to fail if force direction estimation is inaccurate.
In an embodiment, the spatial information of the electrodes in the tactile force sensor is encoded by voxelizing the electrode values in a 3d grid to enable better estimates of force direction. In an embodiment, the system provides a surface normal regularization that improves the accuracy of force predictions that are closer to surface normal at the contact point. In an embodiment, the tactile force model is validated on a real robot manipulation task using rigid objects of different surface properties and soft objects.
As one skilled in the art will appreciate in light of this disclosure, certain examples may be capable of achieving certain advantages, including some or all of the following: (1) increasing the accuracy of force estimates in both direction and magnitude, (2) quantifying force accuracy in standardized metric, (3) providing accurate force inferences through interaction with a calibrated object model, (4) autonomously collecting ground truth force data, and (5) providing validation tasks that confirm the accuracy of the force model.

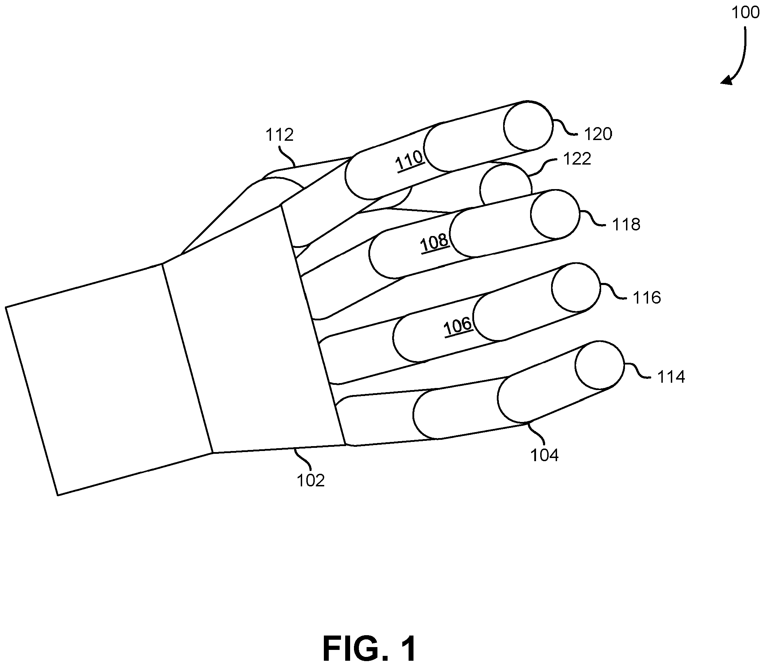

FIG. 1 illustrates an example of a robotic hand instrumented with tactile force sensors. In an embodiment, a computer control system controls the operation of a robotic hand 100. In an embodiment, the robotic hand 100 includes a palm section 102 connected to a plurality of articulated digits. In an embodiment, the articulated digits include a first digit 104, a second digit 106, a third digit 108, and a fourth digit 110. In an embodiment, the articulated digits include an opposing digit 112. In an embodiment, each digits includes a number of articulation points and servos that allow the digit to be moved relative to the palm section 102. In some embodiments, each digit is controlled with a servo motor and cables that run the length of the digit, thereby allowing the digit to flex and curl in a motion similar to human hand. In other embodiments, a digit may include a one or more servo motors at each articulation point allowing each articulation point to be operated separately. In another embodiment, each articulation point may include articulation motors that control rotation and articulation in one or more axis.

In an embodiment, a control system is connected to the robotic hand 100. In an embodiment, the control system is comprised of a computer system with one or more processors and memory storing instructions that, as a result of being executed by the one or more processors, cause the computer system to issue electrical commands to the servo motors controlling the individual digits of the robotic hand 100. In an embodiment, the electrical commands are issued via I/O ports connected to the computer system and amplified using relays, power transistors, or other circuitry. In various embodiments, the electrical commands may be voltage based or current based signals. In an embodiment, electrical commands may be comprised of a series of pulses indicating steps or changes in position to be executed by servo motors.

In an embodiment, one or more digits of the robotic hand 100 may include a tactile sensor. In an embodiment, a tactile sensor is a force sensor such as the SynTouch BioTac. In an embodiment, the tactile sensor may provide temperature, moisture, pressure, or electrical conductivity measurements of the contacted surface. In an embodiment, the tactile sensor may provide the above measurements for plurality of locations on the surface of the sensor. In an embodiment, individual measurements are provided by the tactile sensor for each location in a grid of locations distributed over the surface of the sensor. In an embodiment, force measurements are provided by a grid of electrodes on the surface of the tactile sensor. In an embodiment, the tactile sensor provides a digital electrical interface, such as a parallel or serial interface, that allows signals from the tactile sensor to be provided to the control system. In an embodiment, the tactile sensor is constructed using a compliant contact surface such as silicone that covers the sensor and protects electrical components of the tactile sensor from moisture and abrasion.

In the example illustrated in FIG. 1, the first digit 104 includes a first tactile force sensor 114, the second digit 106 includes a second tactile force sensor 116, the third digit 108 includes a third tactile force sensor 118, the fourth digit 110 includes a fourth tactile force sensor 120, and the opposing digit 112 includes a fifth tactile force sensor 122. In an embodiment, each force sensor positioned so that or more digits are able to be manipulated by the control system such that the surface of the tactile force sensor is used to manipulate an object. In an embodiment, signals provided by the tactile force sensors are provided to the control system, and the control system is able to manipulate the servos in the individual digits of the robotic hand 100 to adjust the forces perceived by the sensors. In an embodiment, this technique allows more reliable manipulation of flexible, compliant, or soft objects. For example, in an embodiment, by adaptively adjusting to the force perceived by the tactile force sensors, the control system is able to reliably pick up and place soft or flexible objects on a hard surface.

In an embodiment, the robotic hand 100 may include various numbers of digits and opposing digits in various configurations. In an embodiment, the robotic hand 100 includes two digits implemented with tactile force sensors in a claw configuration. In an embodiment, the robotic hand 100 includes one or more digits and one or more opposing digits, and only the opposing digit is instrumented with a tactile sensor, and force on the one or more digits is estimated based on the detected force on the opposing digit.

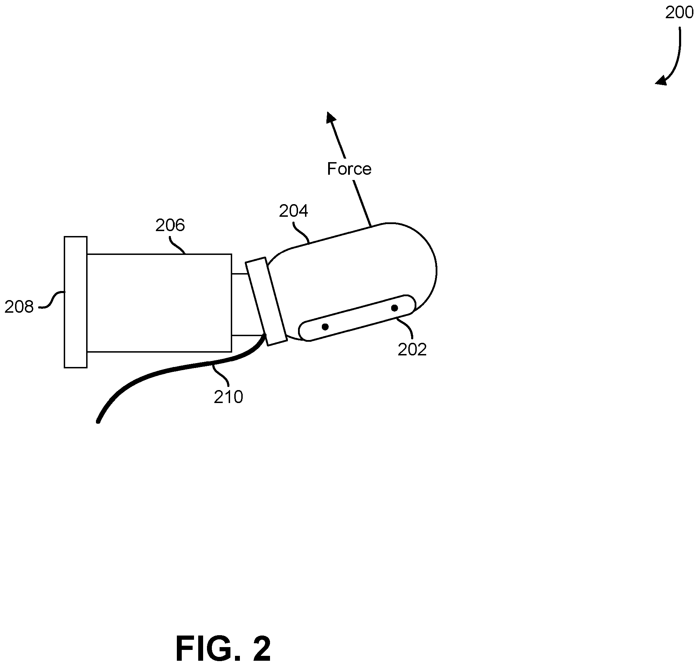

FIG. 2 illustrates an example of a tactile force sensor, in an embodiment. FIG. 2 illustrates an example of a tactile force sensor 200 such as the SynTouch BioTac. In an embodiment, a tactile force sensor 200 includes a sensor component 202, a flexible cover 204, a sensor body 206, and a flange 208. In an embodiment, the tactile force sensor 200 is mounted to the end of a digit on a probe, claw, or robotic hand. In an embodiment, objects are manipulated by the probe, claw, or robotic hand, and the surface of the flexible cover 204 is depressed against the surface of the object being manipulated. In an embodiment, the flexible cover 204 transmits a force to a set of force sensors on the sensor component 202. In an embodiment, the sensor component 202 includes a grid of electrodes that provide a set of signals approximately proportional to the amount of force at the position of the electrode.

In an embodiment, the interface cable 210 connects the sensor component 202 to a control system. In an embodiment, the interface cable 210 is part of a serial interface that transmits the individual values of the electrodes to the control system. In an embodiment, the control system processes the set of values to identify a force magnitude and direction (such as a force vector). In an embodiment, the control system includes a neural network trained to estimate a force and magnitude on the tactile force sensor from the signals provided by the sensor component 202.

In an embodiment, the tactile force sensor 200 is a BioTac sensor from SynTouch. The BoiTac sensor has a rigid core which is enveloped by a high friction elastomeric skin, and a weakly conductive liquid is filled in the space between the core and the skin. In the BioTac sensor, there are 19 impedance sensing electrodes spread out on the core surface, and a thermistor coupled with heaters measure the fluid temperature. In an embodiment, a transducer measures the static pressure, and high frequency changes to the pressure are measured by the transducer at 2.2 kHz and sent to the system in a buffer. In an embodiment, the system determines the contact point on the BioTac sensor and the surface normal by approximating the BioTac surface geometry as a half-cylinder attached with a quarter-cylinder cap, both of the same radius.

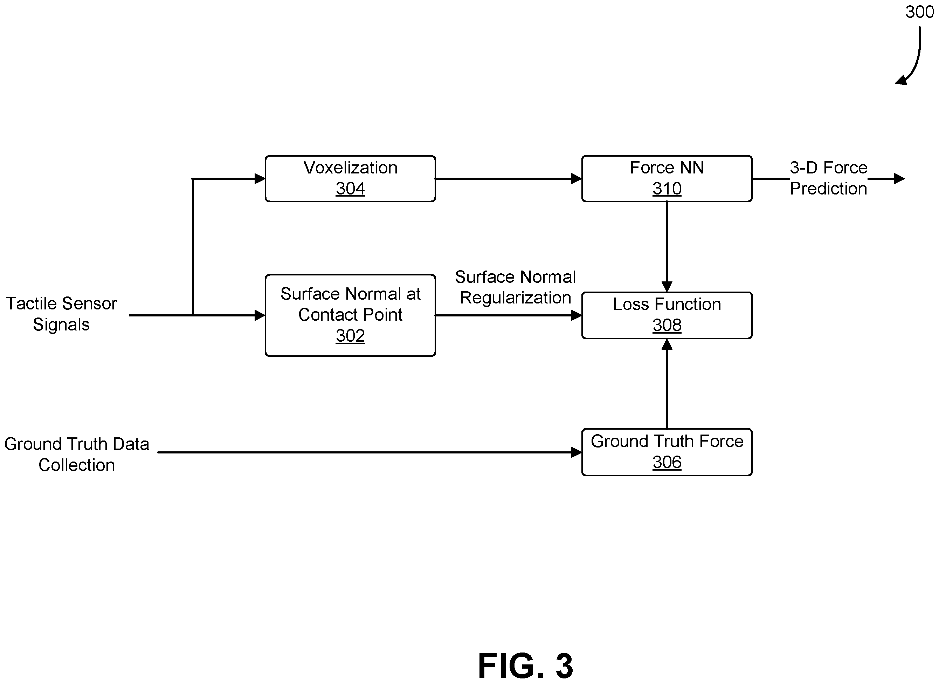

FIG. 3 illustrates an example of a process 300 that trains a tactile force model for estimating the force on a tactile force sensor, in an embodiment. In an embodiment, a system estimates a force on a tactile force sensor with reference to the sensor frame, given a set of sensor readings at the contact point of the sensor. In an embodiment, the sensor readings are voxelized 304, and provided to a feed-forward neural network 310. In an embodiment, learning of the tactile sensor is refined through the introduction of a loss function 308 used in training that scales the loss as a function of the angular distance between the imparted force and the surface normal 302. In an embodiment, the feed-forward neural network 310 is used to learn a function that maps the sensor readings to an estimated force on the senor. In an embodiment, accuracy of the model is provided by using a training dataset that covers a wide range of forces in magnitude and direction. In an embodiment, ground truth force 306 is collected from a plurality of ground truth data collection sources, thereby improving the robustness of the model and the ability to use the force model in a variety of additional tasks.

In an embodiment, the sources include force data collected by rigidly attaching the tactile force sensor to a wrist force/torque ("FT") sensor and pressing on the tactile force sensor using objects. In an embodiment, pressing on the sensor is accomplished by having a human interact with the object and the sensor. In an embodiment, another source is created by attaching an FT sensor to a ball, and then having a robotic hand-arm system such as that illustrated in FIG. 1 interact with the ball. In an embodiment, the ball-interaction source adds randomness to the orientation of the BioTac sensor frame with respect to the force torque sensor frame. In an embodiment, experiments produced a signal to noise ratio for a wrist force/torque sensor in a range of between 0.01 N to 0.1 N, making small force readings very noisy. In an embodiment, to reduce the amount of noise, another source of force data involving collecting sensor readings from a planar pushing setup. In an embodiment, the planar pushing setup is configured so that a robot pushes a box on a planar surface using the tactile force sensor. In an embodiment, the ground truth force for planar pushing is computed by least squared optimization, as described elsewhere in the present document.

In an embodiment, the dataset for system training is collected as follows. In an embodiment, the system uses the OptoForce HEX-E 6-DOF force torque sensor to collect the rigid-ft and ball-ft data. For the rigid-ft data, the BioTac is mounted to the force-torque sensor and objects are pressed down on the finger to collect data. In an embodiment, a total of 20k force samples are collected. In an embodiment, for the ball-ft method the robotic hand pushes the tactile sensor against a hard plastic ball mounted on a vertical bar attached to the force-torque sensor. In an embodiment, for example, the ball-ft method generates 200 random trajectories for the middle fingertip to make contact with the ball from 10 different wrist poses generating a total of 20k force samples. In an embodiment, for planar-pushing method, a tactile force sensor is mounted on a robot which pushes a box weighing 0.65 kg. In an embodiment, the system generates a single straight-line, task-space position trajectory for the fingertip to follow using trajectory optimization. In an embodiment, Riemannian motion policies are used to execute the task space trajectory. In an embodiment, a random initial orientation is chosen for the tactile force sensor and box for every execution of the task space position trajectory. In an embodiment, the orientation of the box is sampled from a small range to keep the contact on the same face of the box for each push. In one experiment, a total of 600 trials on the robot were collected generating 100k force samples in total, in an embodiment. In one example, a final dataset collected across three data source contained a total of 140k force samples. In an embodiment, for ball-ft and planar pushing operations, the robot is tracked with a digital camera such as an ASUS Xtion RGB-D camera. In an embodiment a technique of Depth-based tracking with physical constraints is used to determine the location and motion of the ball and box objects. In an embodiment, contact is enabled prior to when the FT sensor measures a force greater than 2 N for ball-ft and when a BioTac pressure signal value rises greater than 10 units for the planar-pushing setup. In an embodiment, the parameters for the optimization were chosen in a least squared minimization problem as n = 80 and k = 10. In one example, the number of particles n did not affect the force by much above this size and any value of k greater than 2 gave similar performance, in an embodiment. In an embodiment, the coefficient of friction is determined to be 0.1 between the box and the planar surface.

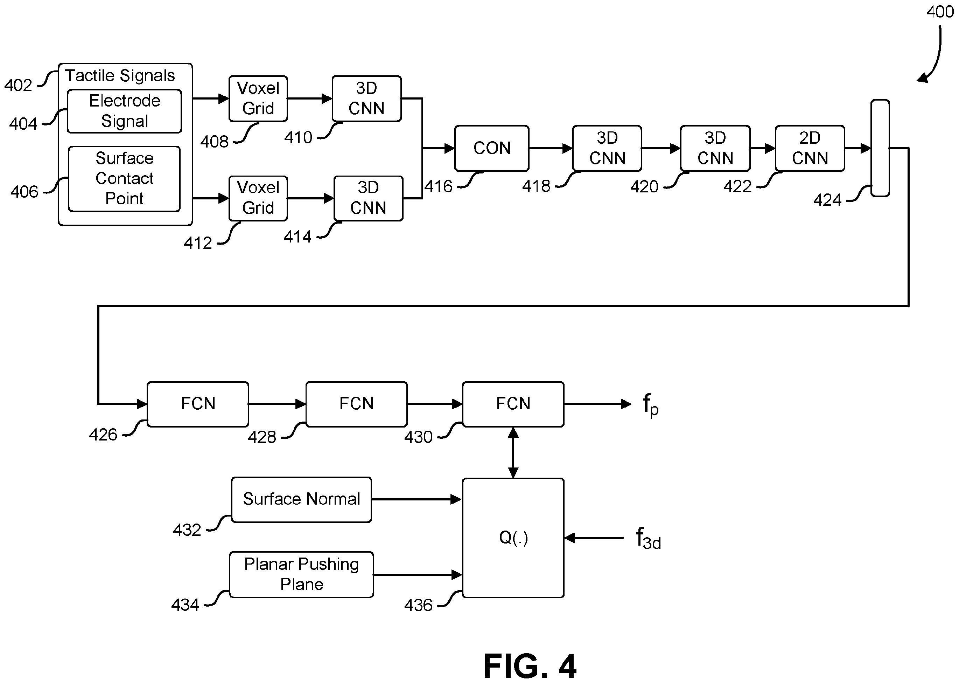

FIG. 4 illustrates an example of force prediction neural network 400, in an embodiment. In an embodiment, a set of tactile force sensor signals such as BioTac signals 402 are fed into the neural network. In an embodiment, the BioTac signals include a set of electrode signals 404 and a surface contact point 406. In an embodiment, the neural network 400 uses the BioTac signals 402 to produce an estimated force vector. In an embodiment, a voxel grid 408 is created based on the value of each electrode and the position of the electrode on the sensor. In an embodiment, the output of the first voxel grid 408 is fed to a first 3-D convolution 410. In an embodiment, a second voxel grid 412 is created that represents the contact point on the sensor. In an embodiment, the output of the second voxel grid 412 is fed to a second 3-D convolution 414.

In an embodiment, the outputs of the 3-D convolutions are concatenated 416, and the result is passed through a first layer of 3-D convolutions 418 and a second layer of 3-D convolutions 420. In an embodiment, the features are then flattened and passed through a layer of 2-D convolutions 422 which is then further flattened into a vector 424. In an embodiment, the vector passes through fully connected layers 426, 428, and 430 to produce a predicted force vector $f_p$ of length 3.

In an embodiment, the predicted force vector $f_p$ is compared to the ground truth force via a scaled surface normal 432.

$$Q_{3d}(f_{3d}, f_p) = (1/\|f_{3d}\|_2)\|f_{3d}-f_p\|_2$$

In an embodiment, for the planar pushing dataset, we use a projected norm 434 to produce Q 436, as there could be forces acting perpendicular to the planar surface which the physics model does not take into account.

$$Q_{proj}(f_{3d}, f_p, {}^wR_B) = (1/||f_{3d}||_2) || ({}^wR_B f_{3d} - {}^wR_B f_p) \psi ||_2^2$$

Where $\psi$ is the orientation of the support surface plane.

In an embodiment, the high friction surface of the tactile force sensor allows for the imparting of force from directions other than the surface normal at a contact point of the sensor, therefore the force could be applied from a contact point on the surface other than a contact point whose surface normal matches with the force direction. In an embodiment, as the angle between the force and the surface normal increases, the sensor's signals may become less meaningful. In an embodiment, the loss function is scaled with an adaptive weight function.

$$\alpha(s_n, f_{3d}) = 2^{\wedge}(\beta(1 - D(s_n, f_{3d}))$$

$$D(s_n, f_{3d}) = (cos^{-1}(s_n \cdot \hat{f}_{3d})) / \pi$$

Where $\beta$ is a scalar weight and $\hat{f}_{3d}$ is the unit vector of the ground truth force vector $f_{3d}$ and D($\cdot$) is the normalized cosine distance function. The loss function used in our network is defined as:

$$Q(\cdot) = \alpha(\cdot)Q_{proj}(f_{3d}, f_p, {}^wR_B) - if\ planar\ pushing$$

$$Q(\cdot) = \alpha(\cdot)Q_{3d}(f_{3d}, f_p) - otherwise$$

In an embodiment, the neural network may be implemented using TensorFlow, and a data set may be split into 80% training, 10% validation, and 10% test by splitting the trials (by whole trials). In an embodiment, training may be run for 200 epochs with a batch size of 512 and the model stored when the loss on the validation set improves. In an embodiment, AdamOptimizer may be used to assist in optimization of the neural network. In an embodiment, an adaptive learning rate is used that starts at $10^{-4}$ and increases for the first two Epochs by $2^{\lfloor (i/50) \rfloor}$ and later decreases by 0.95 each iteration for the remaining Epochs.

In an embodiment, signals from the tactile force sensor are sent to the network when the robot detects that the fingertip of the sensor is in contact with an object. In an embodiment, an absolute pressure signal from the tactile force sensor is used to determine contact and classify the sensor as in contact with the object. In one example, a BioTac sensor is determined to be in contact if the pressure signal maintains a value above 10 for at least 10 times steps. In an embodiment, by checking for contact before sending data to the neural network, false positives are avoided when the sensor is moving in free space.

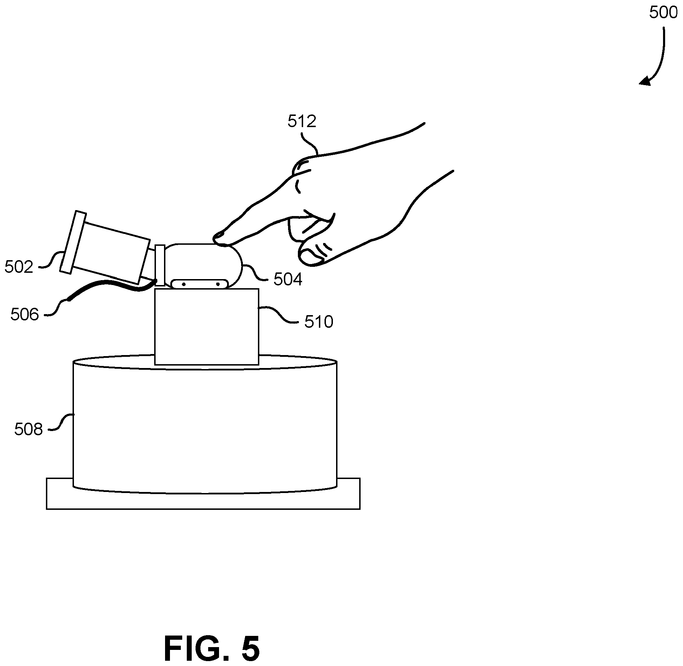

FIG. 5 illustrates an example of a test fixture 500 that measures a force applied to a tactile force sensor 502, in an embodiment. In an embodiment, the tactile force sensor 502 includes a force sensor covered by a flexible membrane 504, signals representing a force on the membrane are transmitted via an interface cable 506 to a computer system. In an embodiment, the force signals include a plurality of signals that represent forces on individual points distributed across the surface of the membrane 504. In an embodiment, force signals are transmitted in a format that allows the computer system to correlate individual force signals with a particular location on the membrane. In an embodiment, the force signals are transmitted as location-value pairs. In an embodiment the force signals are transmitted in a two-dimensional array that represents a corresponding array of force sensors on the surface of the membrane 504. In a comparative example not forming part of the invention, the tactile force sensor 502 is mounted to a force sensor 508 via mounting block 510. In a comparative example not forming part of the invention, the force sensor 508 is an OptoForce HEX-E 6-DOF force torque sensor.

In a comparative example not forming part of the invention, objects are pressed against the membrane 504 manually 512, and force is transmitted through the mounting block 510 to the force sensor 508. In a comparative example not forming part of the invention, a pattern of signals representing the force is transmitted via the interface cable to the computer system, and an additional measurement of the force is received from the force sensor 508. In a comparative example not forming part of the invention, the two measurements provide a source of ground truth force information for the neural network. In an embodiment, an object such as a flat planar object, curved object, compliant objects, is manually 512 pressed against the membrane 504. In an embodiment, the object pressed against the membrane 504 is selected based on an object to be manipulated in a task to be performed so that force estimates generated by the neural network most accurately predict those on the actual object.

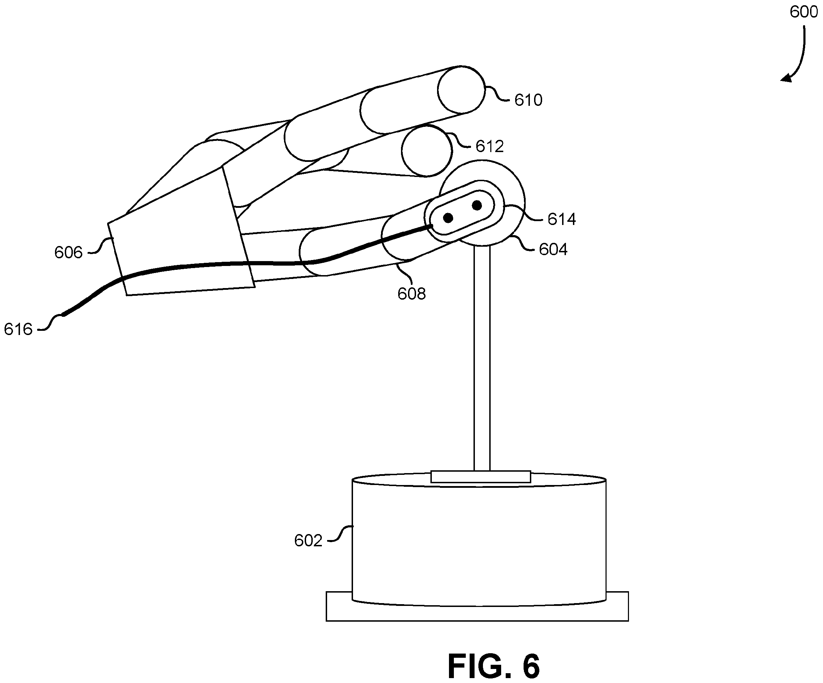

FIG. 6 illustrates an example of a test fixture 600 that measures a force resulting from the manipulation of a ball, in an embodiment. In a comparative example not forming part of the invention, the test fixture includes a force sensor 602 such as the OptoForce HEX-E 6-DOF force torque sensor. In a comparative example not forming part of the invention, the force sensor 602 is coupled to a ball 604 via a rod. In an embodiment, a controlling computer system controls the operation of a robotic hand 606. In an embodiment, the robotic in 606 includes a first digit 608, the second digit 610, and an opposing digit 612. In an embodiment, the first digit 608 is equipped with a tactile force sensor 614 such as a BioTac force sensor.

In an embodiment, the controlling computer system directs the robotic hand 606 to manipulate the ball 604. In an embodiment, signals are sent from the tactile force sensor 614 to the controlling computer system via interface cable 616. In a comparative example not forming part of the invention, each manipulation of the ball 604 by the robotic can 606 produces a set of force signals from both the tactile force sensor 614 and the force sensor 602. In a comparative example not forming part of the invention, each set of force signals and corresponding measurements from the force sensor 602 is used as training data for the neural network. In an embodiment, the controlling computer system directs the robotic hands 606 interact with the ball 604 autonomously to establish ground truth from different approach directions.

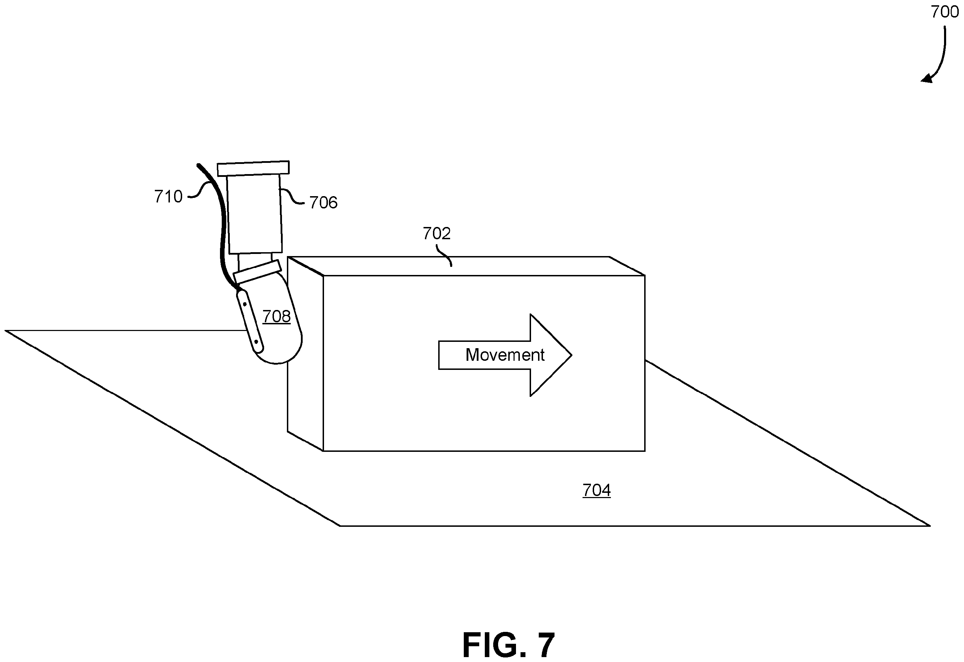

FIG. 7 illustrates an example of a test fixture 700 that measures a force resulting from pushing an object 702 on a planar surface 704, in an embodiment. In an embodiment, rigid body physics is used to infer force from planar pushing of an object 702 with a tactile force sensor 706. In an embodiment, the force inference allows obtaining ground truth force estimates for small force magnitudes. In an embodiment, the force inference also infers forces causing linear and angular motion of the object. In an embodiment, the inferred force is two dimensional and a loss function is introduced which penalizes error only along these two dimensions. In addition, in an embodiment, losses regularized based on the cosine distance between the force direction and surface normal at the contact point on a sensor membrane 708. In an embodiment, this regularization allows for greater accuracy of force predictions when the force is closer to the surface normal.

In an embodiment, the controlling computer system directs the operation of a robotic probe or hand instrumented with the tactile force sensor 706. In an embodiment, the controlling computer system directs the hand to move the object 702 by pressing the membrane 708 of the tactile force sensor 706 against one side of the object 702. In an embodiment, the object is moved by the hand along the planar surface 704. In an embodiment, the position of the object 702 is monitored with the camera, and based on the movement of the object 702, the force exerted by the membrane 708 against the object is determined. In an embodiment, a set of sensor signals is transmitted from the force sensor 706 to a controlling computer system via an interface cable 710.

In an embodiment, given an object with a known mass $m$ in an $SE(2)$ planar space, moving with a linear velocity v and an angular velocity $\omega$, the net force causing this motion can be determined by:

$$f_c = m(dv/dt)$$

$$c \times f_c = I(d\omega/dt)$$

where $f_c \in \mathbb{R}^2$ is the net force acting at a point $c \in \mathbb{R}^2$ with reference to the center of mass (CM) of the object.

In an embodiment, given the linear acceleration of the object, the net force can be determined. However, in an embodiment, if the measurement system is not able to observe small linear accelerations, determining the force is difficult. In an embodiment, the linear acceleration can be small if: 1) the force applied to the object is very small, causing very small linear and angular acceleration, 2) the force applied is perpendicular to the radial line, in which case the object will have a large angular acceleration. In an embodiment, in the latter case, the above equations can be used to determine the net force $f_c$. In an embodiment, we solve for $f_c$ by formulating the above equations as loss functions in a least squared minimization problem:

$$\arg\min \ k\|f_c - m(dv/dt)\|_2^2 + \|[c] \times f_c - I(d\omega/dt)\|_2^2$$

where the weight k scales the linear acceleration loss and [c]_ is the skew symmetric matrix of vector c.

In an embodiment, where the object to be now resting on a planar surface with coefficient of friction $\mu_s$ between the object and the surface, the friction between the object and the planar surface will oppose the motion of the object with a frictional force $f_f$ and moment $n_f$.

In an embodiment, if the contact region between the object and the surface is R and $r$ is any point on the object in this region, the force and moment can be defined using Coulomb's law as:

$$f_f = - \mu_s \int_R \frac{v(r)}{|v(r)|} p(r) \, dA$$

$$n_f = - \mu_s \int_R r \times \frac{v(r)}{|v(r)|} p(r) \, dA$$

where v() is a function that gives the velocity of the point.

In an embodiment, the pressure at $r$ is given by p() and dA is a differential element of area at $r$. In an embodiment, the moment is derived with reference to the object's center of mass. In an embodiment, to make computation of the frictional force tractable for planar pushing, the system assumes that:

1) The pressure distribution in the contact region R is uniform.
2) The rigid body is made of n particles which are uniformly distributed.
3) The contact region is decomposed into N small regions, with center of mass for region $i$ at $r_i$ and the normal force applied by region $i$ is mg/N.

In an embodiment, with the above listed assumptions, frictional force may be determined as:

$$f_f = - \mu_s \frac{mg}{N} \sum_{i=0}^{N} \frac{v(r_i)}{|v(r_i)|}$$

and the moment due to frictional force becomes

$$n_f = - \mu_s \frac{mg}{N} \sum_{i=0}^{N} r_i \times \frac{v(r_i)}{|v(r_i)|}$$

Including the frictional force ff and moment nf in the minimization problem gives:

$$\arg \min \; k \| f_c + f_f - m(dv/dt) \|_2^2 + \| [c] \times f_c + n_f - I(d\omega/dt) \|_2^2$$

Optimizing the above equation yields an estimate of the force $f_c$. In an embodiment, the force $f_c$ is 2D, parallel to the support surface. In an embodiment, transforming this force from the object's frame of reference o to the BioTac sensor frame $B$ given is the ground truth force provides:

$$f_{3d} = {}^B R_o \cdot f_c$$

In an embodiment, directional error is computed as the cosine similarity between the vectors of the predicted force on the ground truth force. In an embodiment, cosine similarity is scaled to give a percentage of direction accuracy. In an embodiment, magnitude error is reported as the symmetric mean absolute percentage accuracy between ground truth and predicted force magnitudes.

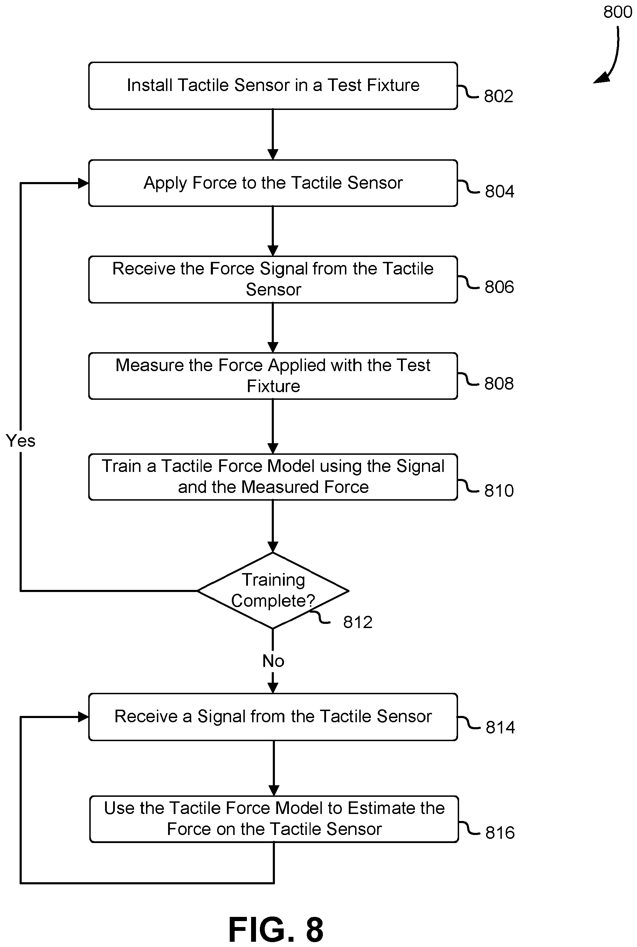

FIG. 8 illustrates an example of a process that, as a result of being performed by a computer system, generates a tactile force model that estimates the force on a tactile force sensor, in an embodiment. In an embodiment, a process 800 begins at block 802 with the computer system installing a tactile sensor in a test fixture. In an embodiment, the test fixture may be a planar motion, ball manipulation, or direct pressing fixture as shown elsewhere in the present application.

In an embodiment, the computer system begins a process of collecting force data for the tactile force sensor. In an embodiment, at block 804, a force is applied to the tactile sensor. In an embodiment, the force may be applied manually or via autonomous control using a controlled robotic hand. In an embodiment, at block 806, the computer system receives a force signal generated as a result of the application of force from the tactile force sensor. In an embodiment, the force signal may be a plurality of electrode signals. In an embodiment, at block 808, the computer system measures the force applied to the tactile sensor using the force sensor on the test fixture. In an embodiment, at block 810, the computer system uses the signal from the tactile force sensor and the measured force to train a tactile force model. In an embodiment, at decision block 812, the computer system determines whether additional training is necessary. In an embodiment, additional training may be necessary based on a configured number of training samples requested. In an embodiment, additional training the necessary based on a measured error produced by the tactile force model. In an embodiment, if additional training is necessary, the process returns to block 804 where another force is applied to the tactile sensor. In an embodiment, if training is complete, execution advances to block 814.

In an embodiment, at block 814, the system uses the tactile force model to estimate the force on the sensor. In an embodiment, at block 814, the computer system receives a signal from the tactile force sensor. In an embodiment, at block 816, the computer system uses the tactile force model to the estimate the actual force on the sensor from the received signal. In an embodiment, the estimated force is in the form of a vector which includes a force magnitude and direction. In an embodiment, execution returns to block 814 and an updated force signal is received from the tactile sensor.

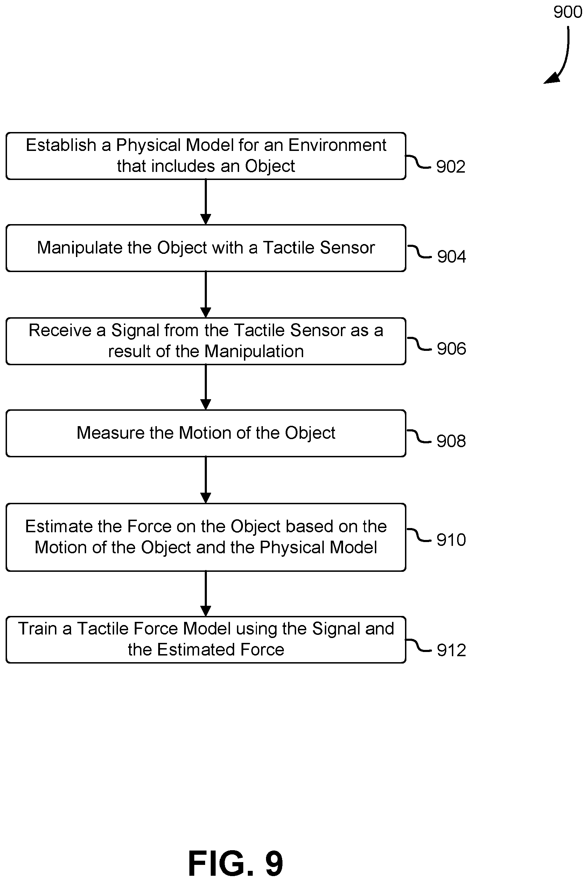

FIG. 9 illustrates an example of a process 900 that, as a result of being performed by computer system, determines the force on a tactile force sensor based on movement of an object manipulated by the sensor, in an embodiment. In an embodiment, the process begins at block 902 with the computer system establishing a physical model for an environment that includes an object. In an embodiment, the model may include one or more of the mass of the object, the center of mass of the object, the geometry of the object, the center of pressure for the object, and one or more environmental parameters. In an embodiment, environmental parameters may include one or more of friction, air resistance, fluid resistance, temperature, pressure, or wind velocity. In an embodiment, at block 904, the computer system commands a robotic mechanism equipped with a tactile force sensor to manipulate the object. In an embodiment, at block 906, the computer system receives a signal from the tactile force sensor as a result of the manipulation of the object. In an embodiment, the signal is a collection of individual signals where each individual signal is associated with an electrode of a plurality of electrodes on the tactile force sensor. In an embodiment, at block 908, the computer system measures the motion of the object produced as a result of the manipulation. In an embodiment, motion of the object is measured using the camera that obtains video footage of the object's motion. In an embodiment, the video footage is analyzed by the computer system to determine the motion of the object.

In an embodiment, at block 910, the computer system estimates the force on the object based at least in part on the determined motion of the object and the physical model. For example, in one embodiment, the physical model includes the center of mass and mass of the object, and the force on the object can be determined as the mass of the object times the acceleration of the object. In an embodiment, force on the object may include linear and angular components, and may be restricted to a two-dimensional plane as described above. In an embodiment, at block 912, the signal acquired from the tactile sensor and the estimated force are used as force data to train a tactile force model. In an embodiment, the tactile force model is usable to convert signals produced from the tactile force sensor into estimated forces and force vectors.

An embodiment includes a processor comprising: one or more arithmetic logic units (ALUs) to be configured to control movement of a robotic device based, at least in part, on one or more neural networks trained using a two-dimensional representation of an objects surface and pressure information from one or more tactile sensors.

An embodiment includes a method comprising: Training one or more neural networks to control one or more robotic devices based, at least in part, on a two-dimensional representation of an objects surface and pressure information from one or more tactile sensors.

An embodiment includes a machine-readable medium having stored thereon a set of instructions, which if performed by one or more processors, cause the one or more processors to at least: train one or more neural networks to control one or more robotic devices based, at least in part, on a two-dimensional representation of an objects surface and pressure information from one or more tactile sensors.

An embodiment includes a machine-readable medium comprising information, which if used by one or more computer instructions to configure one or more processors, cause the one or more processors to control a robotic device based, at least in part, on a machine learning model comprising: an embedding layer to encode a two-dimensional representation of a three-dimensional object and pressure information representing pressure applied to the three-dimensional object sensed by a tactile sensor; a neural network to predict one or more actions of the robotic device based at least in part on the two-dimensional representation and the pressure information.

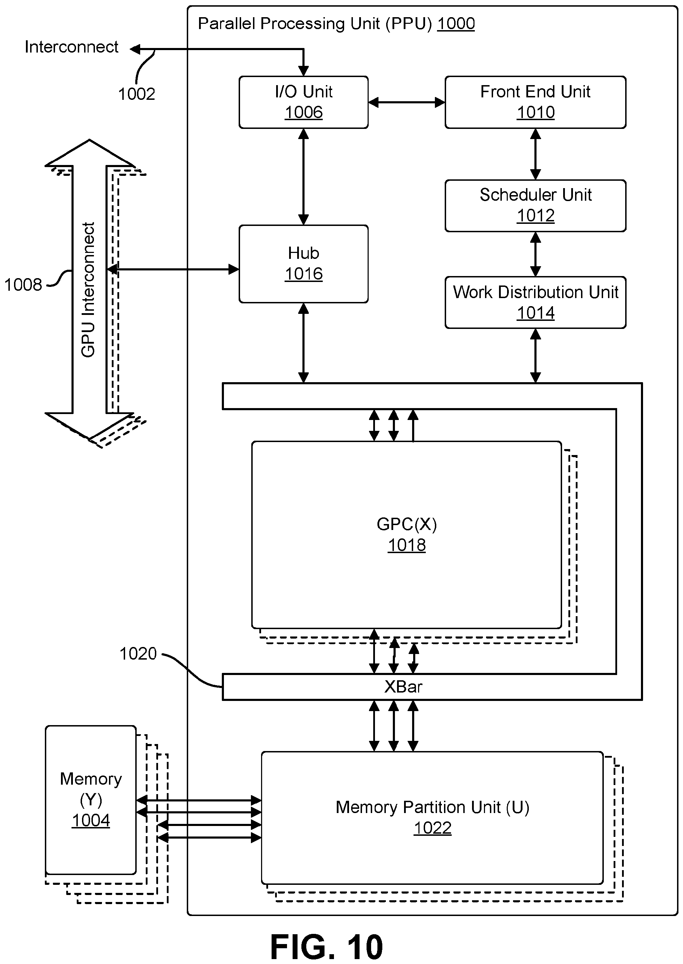

FIG. 10 illustrates a parallel processing unit ("PPU") 1000, in accordance with one embodiment. In an embodiment, the PPU 1000 is configured with machine-readable code that, if executed by the PPU, causes the PPU to perform some or all of processes and techniques described throughout this disclosure. In an embodiment, the PPU 1000 is a multi-threaded processor that is implemented on one or more integrated circuit devices and that utilizes multithreading as a latency-hiding technique designed to process computer-readable instructions (also referred to as machine-readable instructions or simply instructions) on multiple threads in parallel. In an embodiment, a thread refers to a thread of execution and is an instantiation of a set of instructions configured to be executed by the PPU 1000. In an embodiment, the PPU 1000 is a graphics processing unit ("GPU") configured to implement a graphics rendering pipeline for processing three-dimensional ("3D") graphics data in order to generate two-dimensional ("2D") image data for display on a display device such as a liquid crystal display ("LCD") device. In an embodiment, the PPU 1000 is utilized to perform computations such as linear algebra operations and machine-learning operations. FIG. 10 illustrates an example parallel processor for illustrative purposes only and should be construed as a non-limiting example of processor architectures contemplated within the scope of this disclosure and that any suitable processor may be employed to supplement and/or substitute for the same.

In an embodiment, one or more PPUs are configured to accelerate High Performance Computing ("HPC"), data center, and machine learning applications. In an embodiment, the PPU 1000 is configured to accelerate deep learning systems and applications including the following non-limiting examples: autonomous vehicle platforms, deep learning, high-accuracy speech, image, text recognition systems, intelligent video analytics, molecular simulations, drug discovery, disease diagnosis, weather forecasting, big data analytics, astronomy, molecular dynamics simulation, financial modeling, robotics, factory automation, real-time language translation, online search optimizations, personalized user recommendations, and more.

In an embodiment, the PPU 1000 includes an Input/Output ("I/O") unit 1006, a front-end unit 1010, a scheduler unit 1012, a work distribution unit 1014, a hub 1016, a crossbar ("Xbar") 1020, one or more general processing clusters ("GPCs") 1018, and one or more partition units 1022. In an embodiment, the PPU 1000 is connected to a host processor or other PPUs 1000 via one or more high-speed GPU interconnects 1008. In an embodiment, the PPU 1000 is connected to a host processor or other peripheral devices via an interconnect 1002. In an embodiment, the PPU 1000 is connected to a local memory comprising one or more memory devices 1004. In an embodiment, the local memory comprises one or more dynamic random access memory ("DRAM") devices. In an embodiment, the one or more DRAM devices are configured and/or configurable as high-bandwidth memory ("HBM") subsystems, with multiple DRAM dies stacked within each device.

The high-speed GPU interconnect 1008 may refer to a wire-based multi-lane communications link that is used by systems to scale and include one or more PPUs 1000 combined with one or more CPUs, supports cache coherence between the PPUs 1000 and CPUs, and CPU mastering. In an embodiment, data and/or commands are transmitted by the high-speed GPU interconnect 1008 through the hub 1016 to/from other units of the PPU 1000 such as one or more copy engines, video encoders, video decoders, power management units, and other components which may not be explicitly illustrated in FIG. 10.

In an embodiment, the I/O unit 1006 is configured to transmit and receive communications (e.g., commands, data) from a host processor (not illustrated in FIG. 10) over the system bus 1002. In an embodiment, the I/O unit 1006 communicates with the host processor directly via the system bus 1002 or through one or more intermediate devices such as a memory bridge. In an embodiment, the I/O unit 1006 may communicate with one or more other processors, such as one or more of the PPUs 1000 via the system bus 1002. In an embodiment, the I/O unit 1006 implements a Peripheral Component Interconnect Express ("PCIe") interface for communications over a PCIe bus. In an embodiment, the I/O unit 1006 implements interfaces for communicating with external devices.

In an embodiment, the I/O unit 1006 decodes packets received via the system bus 1002. In an embodiment, at least some packets represent commands configured to cause the PPU 1000 to perform various operations. In an embodiment, the I/O unit 1006 transmits the decoded commands to various other units of the PPU 1000 as specified by the commands. In an embodiment, commands are transmitted to the front-end unit 1010 and/or transmitted to the hub 1016 or other units of the PPU 1000 such as one or more copy engines, a video encoder, a video decoder, a power management unit, etc. (not explicitly illustrated in FIG. 10). In an embodiment, the I/O unit 1006 is configured to route communications between and among the various logical units of the PPU 1000.

In an embodiment, a program executed by the host processor encodes a command stream in a buffer that provides workloads to the PPU 1000 for processing. In an embodiment, a workload comprises instructions and data to be processed by those instructions. In an embodiment, the buffer is a region in a memory that is accessible (e.g., read/write) by both the host processor and the PPU 1000 - the host interface unit may be configured to access the buffer in a system memory connected to the system bus 1002 via memory requests transmitted over the system bus 1002 by the I/O unit 1006. In an embodiment, the host processor writes the command stream to the buffer and then transmits a pointer to the start of the command stream to the PPU 1000 such that the front-end unit 1010 receives pointers to one or more command streams and manages the one or more streams, reading commands from the streams and forwarding commands to the various units of the PPU 1000.

In an embodiment, the front-end unit 1010 is coupled to a scheduler unit 1012 that configures the various GPCs 1018 to process tasks defined by the one or more streams. In an embodiment, the scheduler unit 1012 is configured to track state information related to the various tasks managed by the scheduler unit 1012 where the state information may indicate which GPC 1018 a task is assigned to, whether the task is active or inactive, a priority level associated with the task, and so forth. In an embodiment, the scheduler unit 1012 manages the execution of a plurality of tasks on the one or more GPCs 1018.

In an embodiment, the scheduler unit 1012 is coupled to a work distribution unit 1014 that is configured to dispatch tasks for execution on the GPCs 1018. In an embodiment, the work distribution unit 1014 tracks a number of scheduled tasks received from the scheduler unit 1012 and the work distribution unit 1014 manages a pending task pool and an active task pool for each of the GPCs 1018. In an embodiment, the pending task pool comprises a number of slots (e.g., 32 slots) that contain tasks assigned to be processed by a particular GPC 1018; the active task pool may comprise a number of slots (e.g., 4 slots) for tasks that are actively being processed by the GPCs 1018 such that as a GPC 1018 completes the execution of a task, that task is evicted from the active task pool for the GPC 1018 and one of the other tasks from the pending task pool is selected and scheduled for execution on the GPC 1018. In an embodiment, if an active task is idle on the GPC 1018, such as while waiting for a data dependency to be resolved, then the active task is evicted from the GPC 1018 and returned to the pending task pool while another task in the pending task pool is selected and scheduled for execution on the GPC 1018.

In an embodiment, the work distribution unit 1014 communicates with the one or more GPCs 1018 via XBar 1020. In an embodiment, the XBar 1020 is an interconnected network that couples many of the units of the PPU 1000 to other units of the PPU 1000 and can be configured to couple the work distribution unit 1014 to a particular GPC 1018. Although not shown explicitly, one or more other units of the PPU 1000 may also be connected to the XBar 1020 via the hub 1016.

The tasks are managed by the scheduler unit 1012 and dispatched to a GPC 1018 by the work distribution unit 1014. The GPC 1018 is configured to process the task and generate results. The results may be consumed by other tasks within the GPC 1018, routed to a different GPC 1018 via the XBar 1020, or stored in the memory 1004. The results can be written to the memory 1004 via the partition units 1022, which implement a memory interface for reading and writing data to/from the memory 1004. The results can be transmitted to another PPU 1004 or CPU via the high-speed GPU interconnect 1008. In an embodiment, the PPU 1000 includes a number U of partition units 1022 that is equal to the number of separate and distinct memory devices 1004 coupled to the PPU 1000. A partition unit 1022 will be described in more detail elsewhere.

In an embodiment, a host processor executes a driver kernel that implements an application programming interface ("API") that enables one or more applications executing on the host processor to schedule operations for execution on the PPU 1000. In an embodiment, multiple compute applications are simultaneously executed by the PPU 1000 and the PPU 1000 provides isolation, quality of service ("QoS"), and independent address spaces for the multiple compute applications. In an embodiment, an application generates instructions (e.g., in the form of API calls) that cause the driver kernel to generate one or more tasks for execution by the PPU 1000 and the driver kernel outputs tasks to one or more streams being processed by the PPU 1000. In an embodiment, each task comprises one or more groups of related threads, which may be referred to as a warp. In an embodiment, a warp comprises a plurality of related threads (e.g., 32 threads) that can be executed in parallel. In an embodiment, cooperating threads can refer to a plurality of threads including instructions to perform the task and that exchange data through shared memory. Threads and cooperating threads are described in more detail, in accordance with one embodiment, elsewhere in the specification.

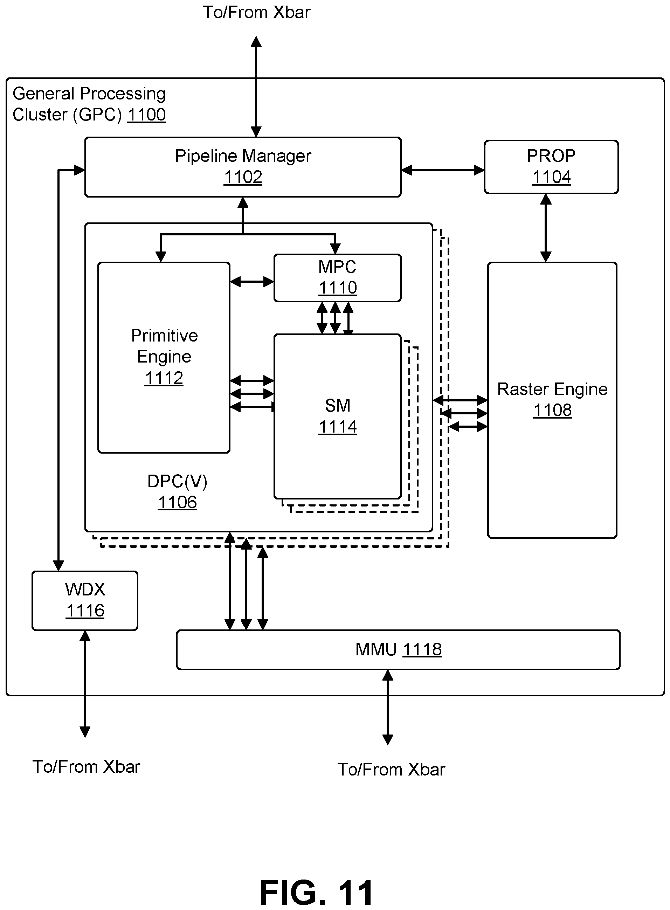

FIG. 11 illustrates a GPC 1100 such as the GPC illustrated of the PPU 1000 of FIG. 10, in accordance with one embodiment. In an embodiment, each GPC 1100 includes a number of hardware units for processing tasks and each GPC 1100 includes a pipeline manager 1102, a pre-raster operations unit ("PROP") 1104, a raster engine 1108, a work distribution crossbar ("WDX") 1116, a memory management unit ("MMU") 1118, one or more Data Processing Clusters ("DPCs") 1106, and any suitable combination of parts. It will be appreciated that the GPC 1100 of FIG. 11 may include other hardware units in lieu of or in addition to the units shown in FIG. 11.

In an embodiment, the operation of the GPC 1100 is controlled by the pipeline manager 1102. The pipeline manager 1102 manages the configuration of the one or more DPCs 1106 for processing tasks allocated to the GPC 1100. In an embodiment, the pipeline manager 1102 configures at least one of the one or more DPCs 1106 to implement at least a portion of a graphics rendering pipeline. In an embodiment, a DPC 1106 is configured to execute a vertex shader program on the programmable streaming multiprocessor ("SM") 1114. The pipeline manager 1102 is configured to route packets received from a work distribution to the appropriate logical units within the GPC 1100, in an embodiment, and some packets may be routed to fixed function hardware units in the PROP 1104 and/or raster engine 1108 while other packets may be routed to the DPCs 1106 for processing by the primitive engine 1112 or the SM 1114. In an embodiment, the pipeline manager 1102 configures at least one of the one or more DPCs 1106 to implement a neural network model and/or a computing pipeline.

The PROP unit 1104 is configured, in an embodiment, to route data generated by the raster engine 1108 and the DPCs 1106 to a Raster Operations ("ROP") unit in the memory partition unit, described in more detail above. In an embodiment, the PROP unit 1104 is configured to perform optimizations for color blending, organize pixel data, perform address translations, and more. The raster engine 1108 includes a number of fixed function hardware units configured to perform various raster operations, in an embodiment, and the raster engine 1108 includes a setup engine, a coarse raster engine, a culling engine, a clipping engine, a fine raster engine, a tile coalescing engine, and any suitable combination thereof. The setup engine, in an embodiment, receives transformed vertices and generates plane equations associated with the geometric primitive defined by the vertices; the plane equations are transmitted to the coarse raster engine to generate coverage information (e.g., an x, y coverage mask for a tile) for the primitive; the output of the coarse raster engine is transmitted to the culling engine where fragments associated with the primitive that fail a z-test are culled, and transmitted to a clipping engine where fragments lying outside a viewing frustum are clipped. In an embodiment, the fragments that survive clipping and culling are passed to the fine raster engine to generate attributes for the pixel fragments based on the plane equations generated by the setup engine. In an embodiment, the output of the raster engine 1108 comprises fragments to be processed by any suitable entity such as by a fragment shader implemented within a DPC 1106.

In an embodiment, each DPC 1106 included in the GPC 1100 comprises an M-Pipe Controller ("MPC") 1110; a primitive engine 1112; one or more SMs 1114; and any suitable combination thereof. In an embodiment, the MPC 1110 controls the operation of the DPC 1106, routing packets received from the pipeline manager 1102 to the appropriate units in the DPC 1106. In an embodiment, packets associated with a vertex are routed to the primitive engine 1112, which is configured to fetch vertex attributes associated with the vertex from memory; in contrast, packets associated with a shader program may be transmitted to the SM 1114.

In an embodiment, the SM 1114 comprises a programmable streaming processor that is configured to process tasks represented by a number of threads. In an embodiment, the SM 1114 is multi-threaded and configured to execute a plurality of threads (e.g., 32 threads) from a particular group of threads concurrently and implements a SIMD (Single-Instruction, Multiple-Data) architecture where each thread in a group of threads (e.g., a warp) is configured to process a different set of data based on the same set of instructions. In an embodiment, all threads in the group of threads execute the same instructions. In an embodiment, the SM 1114 implements a SIMT (Single-Instruction, Multiple Thread) architecture wherein each thread in a group of threads is configured to process a different set of data based on the same set of instructions, but where individual threads in the group of threads are allowed to diverge during execution. In an embodiment, a program counter, call stack, and execution state is maintained for each warp, enabling concurrency between warps and serial execution within warps when threads within the warp diverge. In another embodiment, a program counter, call stack, and execution state is maintained for each individual thread, enabling equal concurrency between all threads, within and between warps. In an embodiment, execution state is maintained for each individual thread and threads executing the same instructions may be converged and executed in parallel for better efficiency. In an embodiment, the SM 1114 is described in more detail below.

In an embodiment, the MMU 1118 provides an interface between the GPC 1100 and the memory partition unit and the MMU 1118 provides translation of virtual addresses into physical addresses, memory protection, and arbitration of memory requests. In an embodiment, the MMU 1118 provides one or more translation lookaside buffers ("TLBs") for performing translation of virtual addresses into physical addresses in memory.

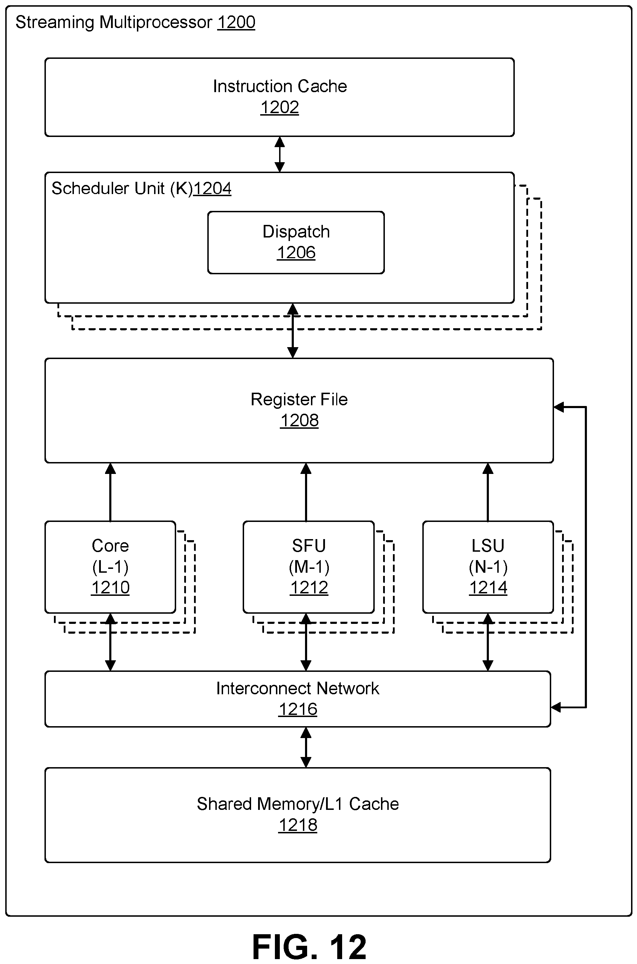

FIG. 12 illustrates a streaming multi-processor such as the streaming multi-processor of FIG. 11, in accordance with one embodiment. In an embodiment, the SM 1200 includes: an instruction cache 1202; one or more scheduler units 1204; a register file 1208; one or more processing cores 1210; one or more special function units ("SFUs") 1212; one or more load/store units ("LSUs") 1214; an interconnect network 1216; a shared memory/L1 cache 1218; and any suitable combination thereof. In an embodiment, the work distribution unit dispatches tasks for execution on the GPCs of the PPU and each task is allocated to a particular DPC within a GPC and, if the task is associated with a shader program, the task is allocated to an SM 1200. In an embodiment, the scheduler unit 1204 receives the tasks from the work distribution unit and manages instruction scheduling for one or more thread blocks assigned to the SM 1200. In an embodiment, the scheduler unit 1204 schedules thread blocks for execution as warps of parallel threads, wherein each thread block is allocated at least one warp. In an embodiment, each warp executes threads. In an embodiment, the scheduler unit 1204 manages a plurality of different thread blocks, allocating the warps to the different thread blocks and then dispatching instructions from the plurality of different cooperative groups to the various functional units (e.g., cores 1210, SFUs 1212, and LSUs 1214) during each clock cycle.

Cooperative Groups may refer to a programming model for organizing groups of communicating threads that allows developers to express the granularity at which threads are communicating, enabling the expression of richer, more efficient parallel decompositions. In an embodiment, cooperative launch APIs support synchronization amongst thread blocks for the execution of parallel algorithms. In an embodiment, applications of conventional programming models provide a single, simple construct for synchronizing cooperating threads: a barrier across all threads of a thread block (e.g., the syncthreads( ) function). However, programmers would often like to define groups of threads at smaller than thread block granularities and synchronize within the defined groups to enable greater performance, design flexibility, and software reuse in the form of collective group-wide function interfaces. Cooperative Groups enable programmers to define groups of threads explicitly at sub-block (i.e., as small as a single thread) and multi-block granularities, and to perform collective operations such as synchronization on the threads in a cooperative group. The programming model supports clean composition across software boundaries, so that libraries and utility functions can synchronize safely within their local context without having to make assumptions about convergence. Cooperative Groups primitives enable new patterns of cooperative parallelism, including producer-consumer parallelism, opportunistic parallelism, and global synchronization across an entire grid of thread blocks.

In an embodiment, a dispatch unit 1206 is configured to transmit instructions to one or more of the functional units and the scheduler unit 1204 includes two dispatch units 1206 that enable two different instructions from the same warp to be dispatched during each clock cycle. In an embodiment, each scheduler unit 1204 includes a single dispatch unit 1206 or additional dispatch units 1206.

Each SM 1200, in an embodiment, includes a register file 1208 that provides a set of registers for the functional units of the SM 1200. In an embodiment, the register file 1208 is divided between each of the functional units such that each functional unit is allocated a dedicated portion of the register file 1208. In an embodiment, the register file 1208 is divided between the different warps being executed by the SM 1200 and the register file 1208 provides temporary storage for operands connected to the data paths of the functional units. In an embodiment, each SM 1200 comprises a plurality of L processing cores 1210. In an embodiment, the SM 1200 includes a large number (e.g., 128 or more) of distinct processing cores 1210. Each core 1210, in an embodiment, includes a fully-pipelined, single-precision, double-precision, and/or mixed precision processing unit that includes a floating point arithmetic logic unit and an integer arithmetic logic unit. In an embodiment, the floating point arithmetic logic units implement the IEEE 754-2008 standard for floating point arithmetic. In an embodiment, the cores 1210 include 64 single-precision (32-bit) floating point cores, 64 integer cores, 32 double-precision (64-bit) floating point cores, and 8 tensor cores.

Tensor cores are configured to perform matrix operations in accordance with an embodiment. In an embodiment, one or more tensor cores are included in the cores 1210. In an embodiment, the tensor cores are configured to perform deep learning matrix arithmetic, such as convolution operations for neural network training and inferencing. In an embodiment, each tensor core operates on a 4x4 matrix and performs a matrix multiply and accumulate operation $D = A \times B + C$, where A, B, C, and D are 4x4 matrices.

In an embodiment, the matrix multiply inputs A and B are 16-bit floating point matrices and the accumulation matrices C and D are 16-bit floating point or 32-bit floating point matrices. In an embodiment, the tensor cores operate on 16-bit floating point input data with 32-bit floating point accumulation. In an embodiment, the 16-bit floating point multiply requires 64 operations and results in a full precision product that is then accumulated using 32-bit floating point addition with the other intermediate products for a 4x4x4 matrix multiply. Tensor cores are used to perform much larger two-dimensional or higher dimensional matrix operations, built up from these smaller elements, in an embodiment. In an embodiment, an API, such as CUDA 9 C++ API, exposes specialized matrix load, matrix multiply and accumulate, and matrix store operations to efficiently use tensor cores from a CUDA-C++ program. In an embodiment, at the CUDA level, the warp-level interface assumes 16x16 size matrices spanning all 32 threads of the warp.

In an embodiment, each SM 1200 comprises M SFUs 1212 that perform special functions (e.g., attribute evaluation, reciprocal square root, and the like). In an embodiment, the SFUs 1212 include a tree traversal unit configured to traverse a hierarchical tree data structure. In an embodiment, the SFUs 1212 include texture units configured to perform texture map filtering operations. In an embodiment, the texture units are configured to load texture maps (e.g., a 2D array of texels) from the memory and sample the texture maps to produce sampled texture values for use in shader programs executed by the SM 1200. In an embodiment, the texture maps are stored in the shared memory/L1 cache. The texture units implement texture operations such as filtering operations using mip-maps (e.g., texture maps of varying levels of detail), in accordance with one embodiment. In an embodiment, each SM 1200 includes two texture units.

Each SM 1200 comprises N LSUs that implement load and store operations between the shared memory/L1 cache and the register file 1208, in an embodiment. Each SM 1200 includes an interconnect network 1216 that connects each of the functional units to the register file 1208 and the LSU 1214 to the register file 1208, shared memory/ L1 cache 1218 in an embodiment. In an embodiment, the interconnect network 1216 is a crossbar that can be configured to connect any of the functional units to any of the registers in the register file 1208 and connect the LSUs 1214 to the register file and memory locations in shared memory/L1 cache 1218.

The shared memory/L1 cache 1218 is an array of on-chip memory that allows for data storage and communication between the SM 1200 and the primitive engine and between threads in the SM 1200 in an embodiment. In an embodiment, the shared memory/L1 cache 1218 comprises 128KB of storage capacity and is in the path from the SM 1200 to the partition unit. The shared memory/L1 cache 1218, in an embodiment, is used to cache reads and writes. One or more of the shared memory/L1 cache 1218, L2 cache, and memory are backing stores.

Combining data cache and shared memory functionality into a single memory block provides improved performance for both types of memory accesses, in an embodiment. The capacity, in an embodiment, is used or is usable as a cache by programs that do not use shared memory, such as if shared memory is configured to use half of the capacity, texture, and load/store operations can use the remaining capacity. Integration within the shared memory/L1 cache 1218 enables the shared memory/L1 cache 1218 to function as a high-throughput conduit for streaming data while simultaneously providing high-bandwidth and low-latency access to frequently reused data, in accordance with an embodiment. When configured for general purpose parallel computation, a simpler configuration can be used compared with graphics processing. In an embodiment, fixed function graphics processing units are bypassed, creating a much simpler programming model. In the general purpose parallel computation configuration, the work distribution unit assigns and distributes blocks of threads directly to the DPCs, in an embodiment. The threads in a block execute the same program, using a unique thread ID in the calculation to ensure each thread generates unique results, using the SM 1200 to execute the program and perform calculations, shared memory/L1 cache 1218 to communicate between threads, and the LSU 1214 to read and write global memory through the shared memory/L1 cache 1218 and the memory partition unit, in accordance with one embodiment. In an embodiment, when configured for general purpose parallel computation, the SM 1200 writes commands that the scheduler unit can use to launch new work on the DPCs.

In an embodiment, the PPU is included in or coupled to a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, and more. In an embodiment, the PPU is embodied on a single semiconductor substrate. In an embodiment, the PPU is included in a system-on-a-chip ("SoC") along with one or more other devices such as additional PPUs, the memory, a reduced instruction set computer ("RISC") CPU, a memory management unit ("MMU"), a digital-to-analog converter ("DAC"), and the like.

In an embodiment, the PPU may be included on a graphics card that includes one or more memory devices. The graphics card may be configured to interface with a PCIe slot on a motherboard of a desktop computer. In yet another embodiment, the PPU may be an integrate graphics processing unit ("iGPU") included in the chipset of the motherboard.

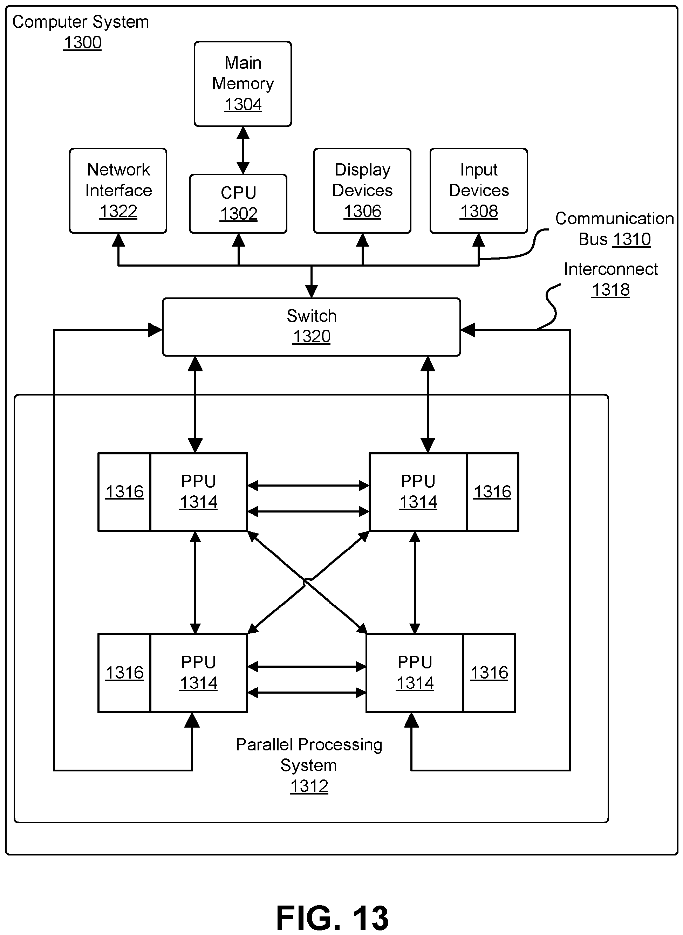

FIG. 13 illustrates a computer system 1300 in which the various architecture and/or functionality can be implemented, in accordance with one embodiment. The computer system 1300, in an embodiment, is configured to implement various processes and methods described throughout this disclosure.

In an embodiment, the computer system 1300 comprises at least one central processing unit 1302 that is connected to a communication bus 1310 implemented using any suitable protocol, such as PCI (Peripheral Component Interconnect), PCI-Express, AGP (Accelerated Graphics Port), HyperTransport, or any other bus or point-to-point communication protocol(s). In an embodiment, the computer system 1300 includes a main memory 1304 and control logic (e.g., implemented as hardware, software, or a combination thereof) and data are stored in the main memory 1304 which may take the form of random access memory ("RAM"). In an embodiment, a network interface subsystem 1322 provides an interface to other computing devices and networks for receiving data from and transmitting data to other systems from the computer system 1300.

The computer system 1300, in an embodiment, includes input devices 1308, the parallel processing system 1312, and display devices 1306 which can be implemented using a conventional CRT (cathode ray tube), LCD (liquid crystal display), LED (light emitting diode), plasma display, or other suitable display technologies. In an embodiment, user input is received from input devices 1308 such as keyboard, mouse, touchpad, microphone, and more. In an embodiment, each of the foregoing modules can be situated on a single semiconductor platform to form a processing system.

In the present description, a single semiconductor platform may refer to a sole unitary semiconductor-based integrated circuit or chip. It should be noted that the term single semiconductor platform may also refer to multi-chip modules with increased connectivity which simulate on-chip operation, and make substantial improvements over utilizing a conventional central processing unit ("CPU") and bus implementation. Of course, the various modules may also be situated separately or in various combinations of semiconductor platforms per the desires of the user.

In an embodiment, computer programs in the form of machine-readable executable code or computer control logic algorithms are stored in the main memory 1304 and/or secondary storage. Computer programs, if executed by one or more processors, enable the system 1300 to perform various functions in accordance with one embodiment. The memory 1304, the storage, and/or any other storage are possible examples of computer-readable media. Secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory.

In an embodiment, the architecture and/or functionality of the various previous figures are implemented in the context of the central processor 1302; parallel processing system 1312; an integrated circuit capable of at least a portion of the capabilities of both the central processor 1302; the parallel processing system 1312; a chipset (e.g., a group of integrated circuits designed to work and sold as a unit for performing related functions, etc.); and any suitable combination of integrated circuit.

In an embodiment, the architecture and/or functionality of the various previous figures is be implemented in the context of a general computer system, a circuit board system, a game console system dedicated for entertainment purposes, an application-specific system, and more. In an embodiment, the computer system 1300 may take the form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In an embodiment, a parallel processing system 1312 includes a plurality of PPUs 1314 and associated memories 1316. In an embodiment, the PPUs are connected to a host processor or other peripheral devices via an interconnect 1318 and a switch 1320 or multiplexer. In an embodiment, the parallel processing system 1312 distributes computational tasks across the PPUs 1314 which can be parallelizable - for example, as part of the distribution of computational tasks across multiple GPU thread blocks. In an embodiment, memory is shared and accessible (e.g., for read and/or write access) across some or all of the PPUs 1314, although such shared memory may incur performance penalties relative to the use of local memory and registers resident to a PPU. In an embodiment, the operation of the PPUs 1314 is synchronized through the use of a command such as _syncthreads() which requires all threads in a block (e.g., executed across multiple PPUs 1314) to reach a certain point of execution of code before proceeding.

The specification and drawings are, accordingly, to be regarded in an illustrative rather than a restrictive sense. It will, however, be evident that various modifications and changes may be made thereunto without departing from the scope of the invention as set forth in the claims.

Other variations are within the spirit of the present disclosure. Thus, while the disclosed techniques are susceptible to various modifications and alternative constructions, certain illustrated embodiments thereof are shown in the drawings and have been described above in detail.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal.

Conjunctive language, such as phrases of the form "at least one of A, B, and C," or "at least one of A, B and C," unless specifically stated otherwise or otherwise clearly contradicted by context, is otherwise understood with the context as used in general to present that an item, term, etc., may be either A or B or C, or any nonempty subset of the set of A and B and C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). The number of items in a plurality is at least two, but can be more when so indicated either explicitly or by context. Further, unless stated otherwise or otherwise clear from context, the phrase "based on" means "based at least in part on" and not "based solely on."

Operations of processes described herein can be performed in any suitable order unless otherwise indicated herein or otherwise clearly contradicted by context. In an embodiment, a process such as those processes described herein (or variations and/or combinations thereof) is performed under the control of one or more computer systems configured with executable instructions and is implemented as code (e.g., executable instructions, one or more computer programs or one or more applications) executing collectively on one or more processors, by hardware or combinations thereof. In an embodiment, the code is stored on a computer-readable storage medium, for example, in the form of a computer program comprising a plurality of instructions executable by one or more processors. In an embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In an embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause the computer system to perform operations described herein. The set of non-transitory computer-readable storage media, in an embodiment, comprises multiple non-transitory computer-readable storage media and one or more of individual non-transitory storage media of the multiple non-transitory computer-readable storage media lack all of the code while the multiple non-transitory computer-readable storage media collectively store all of the code. In an embodiment, the executable instructions are executed such that different instructions are executed by different processors - for example, a non-transitory computer-readable storage medium store instructions and a main CPU execute some of the instructions while a graphics processor unit executes other instructions. In an embodiment, different components of a computer system have separate processors and different processors execute different subsets of the instructions.

Accordingly, in an embodiment, computer systems are configured to implement one or more services that singly or collectively perform operations of processes described herein and such computer systems are configured with applicable hardware and/or software that enable the performance of the operations. Further, a computer system that implements an embodiment of the present disclosure is a single device and, in another embodiment, is a distributed computer system comprising multiple devices that operate differently such that the distributed computer system performs the operations described herein and such that a single device does not perform all operations.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Embodiments of this disclosure are described herein, including the best mode known to the inventors for carrying out the invention. Variations of those embodiments may become apparent to those of ordinary skill in the art upon reading the foregoing description. The inventors expect skilled artisans to employ such variations as appropriate and the inventors intend for embodiments of the present disclosure to be practiced otherwise than as specifically described herein. Accordingly, the scope of the present disclosure includes all modifications and equivalents of the subject matter recited in the claims appended hereto as permitted by applicable law. Moreover, any combination of the above-described elements in all possible variations thereof is encompassed by the scope of the present disclosure unless otherwise indicated herein or otherwise clearly contradicted by context.

In the description and claims, the terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout the specification terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In a similar manner, the term "processor" may refer to any device or portion of a device that processes electronic data from registers and/or memory and transform that electronic data into other electronic data that may be stored in registers and/or memory. As non-limiting examples, "processor" may be a Central Processing Unit (CPU) or a Graphics Processing Unit

(GPU). A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. The terms "system" and "method" are used herein interchangeably insofar as the system may embody one or more methods and the methods may be considered a system.

In the present document, references may be made to obtaining, acquiring, receiving, or inputting analog or digital data into a subsystem, computer system, or computer-implemented machine. The process of obtaining, acquiring, receiving, or inputting analog and digital data can be accomplished in a variety of ways such as by receiving the data as a parameter of a function call or a call to an application programming interface. In some implementations, the process of obtaining, acquiring, receiving, or inputting analog or digital data can be accomplished by transferring the data via a serial or parallel interface. In another implementation, the process of obtaining, acquiring, receiving, or inputting analog or digital data can be accomplished by transferring the data via a computer network from the providing entity to the acquiring entity. References may also be made to providing, outputting, transmitting, sending, or presenting analog or digital data. In various examples, the process of providing, outputting, transmitting, sending, or presenting analog or digital data can be accomplished by transferring the data as an input or output parameter of a function call, a parameter of an application programming interface or interprocess communication mechanism.

**Claims**

1. A method, comprising:

   manipulating (904) an object (702) with a probe that is instrumented with a force sensor (114, 116, 118, 120, 122, 200, 502, 614, 706);
   receiving (906) a signal from the force sensor (114, 116, 118, 120, 122, 200, 502, 614, 706);
   receiving video of the object (702);
   determining motion of the object (702) based at least in part on the video;
   estimating (910) a force on the probe based on the motion of the object (702) and a physical model of the object (702);
   training (912) a tactile force model for the force sensor (114, 116, 118, 120, 122, 200, 502, 614, 706) using the signal and the estimated force; and
   determining a force on the probe using the tactile force model.

2. The method of claim 1, wherein:

   the object (702) is manipulated by pushing the object (702) on a planar surface; and
   the physical model of the object (702) includes the mass of the object (702) and a measure of friction between the object (702) and the planar surface.

3. The method of any of the preceding claims, wherein:

   the motion of the object (702) includes a linear component and an angular component; and
   the force on the probe is determined to be a vector parallel to the planar surface.

4. The method of any of the preceding claims, wherein:

   the signal includes a plurality of voxelized electrode signals (404); and
   a contact point (406) on the force sensor is determined based at least in part on the voxelized electrode signals (404).

5. The method of any of the preceding claims, wherein:

   the estimated force is based at least in part on a loss function; and
   the loss function is a function of an angular distance between an imparted force on the object (702) and a surface normal (302) of the object (702) at a contact point.

6. The method of any of the preceding claims, further comprising:

   collecting force data as a result of performing planar pushing, ball manipulation, and rigid-object pressing tasks;
   using the force data to generate the tactile force model; and
   using the tactile force model to estimate a force on the force sensor (114, 116, 118, 120, 122, 200, 502, 614, 706) produced when performing a different task.

7. A system (1300), comprising:

   one or more processors (1302); and
   memory (1304) to store computer-executable instructions that, if executed, cause the one or more processors (1302) to:

      receive (906), from a force sensor (114, 116, 118, 120, 122, 200, 502, 614, 706), a signal generated in response to a force exerted on an object (702);
      receive video of the object (702); and
      determine the motion of the object (702) based at least in part on the video;
      generate (910) an estimate of the force exerted on the object (702) based on the motion of the object (702) and a physical model of the object (702);
      train a neural network using the signal and the estimate of the force; and

use the trained neural network to convert a signal from a second tactile force sensor (116) to a force estimate.

8.  The system (1300) of claim 7, wherein the force estimate includes a force magnitude and a force direction relative to the orientation of the second tactile force sensor (116).

9.  The system (1300) of any of claims 7 to 8, wherein:

    the object (702) is a rectangular object; and
    the motion of the object (702) includes planar motion along a surface and angular motion of the object (702).

10. The system (1300) of any of claims 7 to 9, wherein the estimate of the force is determined by solving a least squared minimization of the linear acceleration and angular acceleration of the object (702).

11. The system (1300) of any of claims 7 to 10, wherein the computer-executable instructions that, if executed, cause the one or more processors (1302) to further:

    determine a tactile force model for the tactile force sensor based at least in part on the estimated force and the signal and preferably,
    receive a second signal from the force sensor (114, 116, 118, 120, 122, 200, 502, 614, 706); and
    use the tactile force model to estimate an amount of force represented by the second signal.

12. One or more non-transitory computer-readable storage media having stored thereon executable instructions that, as a result of being executed by one or more processors (1302) of a computer system (1300), cause the computer system (1300) to at least:

    receive (906), from a tactile force sensor, a signal generated in response to a force exerted on an object (702);
    receive video of the object (702);
    determine the motion of the object (702) based at least in part on the video;
    estimate a force on the probe based on the motion of the object (702) and a physical model of the object (702);
    train (912) a tactile force model using the signal and the estimated force; and
    use the tactile force model to determine a force on the tactile force sensor.

13. The one or more non-transitory computer-readable storage media of claim 12, wherein:

    the set of signals is collected from a set of electrodes on the tactile force sensor; and
    the set of signals is stored as a first voxel grid (408).

14. The one or more non-transitory computer-readable storage media of claim 13, wherein:

    a contact point (406) on the tactile force sensor is stored in a second voxel grid (412); and
    the first voxel grid (408) and the second voxel grid (412) are concatenated and pass through two layers of 3D convolutions (418, 420), and preferably
    features of the 3D convolutions (418, 420) are flattened and passed through a layer of 2D convolutions (422); and
    features of the 2D convolutions are flattened into a vector (424) which is used to estimate the second force.

15. The one or more non-transitory computer-readable storage media of any of claims 12 to 14, wherein the executable instructions further cause the computer system to:

    validate a force magnitude produced by the tactile force model by performing a task of grasping a deformable object; and
    validate a force vector direction produced by the tactile force model by placing a deformable object onto a planar surface.

16. The non-transitory computer-readable storage medium of any of claims 12 to 15, wherein:

    the tactile force sensor provides a plurality of force measurements from a plurality of different points on a surface of the sensor; and
    the tactile force sensor provides information that identifies a location on the surface of the sensor for each force measurement of the plurality of force measurements.

17. The non-transitory computer-readable storage medium of any of claims 12 to 16, wherein the executable instructions further cause the computer system to:

cause a robot instrumented with one or more tactile force sensors to manipulate an object (702);
receive a signal from the one or more tactile force sensors; and
determine a force on the object (702) using the tactile force model and the signal,
and preferably to cause the robot to adjust the manipulation of the object (702) based at least in part on the determined force.

**Patentansprüche**

1. Verfahren, umfassend:

Manipulation (904) eines Objekts (702) mit einer Sonde, die mit einem Kraftsensor (114, 116, 118, 120, 122, 200, 502, 614, 706) ausgestattet ist;
Empfangen (906) eines Signals von dem Kraftsensor (114, 116, 118, 120, 122, 200, 502, 614, 706);
Empfangen eines Videos des Objekts (702);
Bestimmen einer Bewegung des Objekts (702) zumindest teilweise basierend auf dem Video;
Schätzen (910) einer Kraft auf die Sonde basierend auf der Bewegung des Objekts (702) und einem physikalischen Modell des Objekts (702);
Trainieren (912) eines taktilen Kraftmodells für den Kraftsensor (114, 116, 118, 120, 122, 200, 502, 614, 706) unter Verwendung des Signals und der geschätzten Kraft; und
Bestimmen einer Kraft auf die Sonde unter Verwendung des taktilen Kraftmodells.

2. Verfahren nach Anspruch 1, wobei:

das Objekt (702) durch Schieben des Objekts (702) auf einer ebenen Oberfläche manipuliert wird; und
das physikalische Modell des Objekts (702) die Masse des Objekts (702) und ein Maß für die Reibung zwischen dem Objekt (702) und der ebenen Oberfläche beinhaltet.

3. Verfahren nach einem der vorstehenden Ansprüche, wobei:

die Bewegung des Objekts (702) eine lineare Komponente und eine Winkelkomponente beinhaltet; und
die Kraft auf die Sonde als ein Vektor parallel zur ebenen Oberfläche bestimmt wird.

4. Verfahren nach einem der vorstehenden Ansprüche, wobei:

das Signal eine Vielzahl von voxelisierten Elektrodensignalen (404) beinhaltet; und
ein Kontaktpunkt (406) auf dem Kraftsensor zumindest teilweise basierend auf den voxelisierten Elektrodensignalen (404) bestimmt wird.

5. Verfahren nach einem der vorstehenden Ansprüche, wobei:

die geschätzte Kraft zumindest teilweise auf einer Verlustfunktion basiert; und
die Verlustfunktion eine Funktion eines Winkelabstands zwischen einer auf das Objekt (702) ausgeübten Kraft und einer Oberflächennormalen (302) des Objekts (702) an einem Kontaktpunkt ist.

6. Verfahren nach einem der vorstehenden Ansprüche, weiter umfassend:

Erfassen von Kraftdaten infolge der Durchführung von ebenen Schiebe-, Kugelmanipulations- und Druckaufgaben mit starren Objekten;
Verwenden der Kraftdaten zur Erzeugung des taktilen Kraftmodells; und
Verwenden des taktilen Kraftmodells zur Schätzung einer Kraft auf den Kraftsensor (114, 116, 118, 120, 122, 200, 502, 614, 706), die bei der Durchführung einer anderen Aufgabe erzeugt wird.

**7.** System (1300), umfassend:

einen oder mehrere Prozessoren (1302); und
Speicher (1304), um computerausführbare Anweisungen zu speichern, die, wenn sie ausgeführt werden, den einen oder die mehreren Prozessoren (1302) veranlassen zum:

Empfangen (906) eines Signals von einem Kraftsensor (114, 116, 118, 120, 122, 200, 502, 614, 706), das als Reaktion auf eine auf ein Objekt (702) ausgeübte Kraft erzeugt wird;
Empfangen eines Videos des Objekts (702); und
Bestimmen der Bewegung des Objekts (702) zumindest teilweise basierend auf dem Video;
Erzeugen (910) einer Schätzung der auf das Objekt (702) ausgeübten Kraft basierend auf der Bewegung des Objekts (702) und einem physikalischen Modell des Objekts (702);
Trainieren eines neuronalen Netzwerks unter Verwendung des Signals und der Kraftschätzung; und
Verwenden des trainierten neuronalen Netzwerks, um ein Signal von einem zweiten taktilen Kraftsensor (116) in eine Kraftschätzung umzuwandeln.

**8.** System (1300) nach Anspruch 7, wobei die Kraftschätzung eine Kraftgröße und eine Kraftrichtung relativ zur Ausrichtung des zweiten taktilen Kraftsensors (116) beinhaltet.

**9.** System (1300) nach einem der Ansprüche 7 bis 8, wobei:

das Objekt (702) ein rechteckiges Objekt ist; und
die Bewegung des Objekts (702) eine ebene Bewegung entlang einer Oberfläche und eine Winkelbewegung des Objekts (702) beinhaltet.

**10.** System (1300) nach einem der Ansprüche 7 bis 9, wobei die Kraftschätzung durch Lösen einer Minimierung des kleinsten Quadrats der linearen Beschleunigung und der Winkelbeschleunigung des Objekts (702) bestimmt wird.

**11.** System (1300) nach einem der Ansprüche 7 bis 10, wobei die computerausführbaren Anweisungen, wenn sie ausgeführt werden, den einen oder die mehreren Prozessoren (1302) weiter veranlassen zum:

Bestimmen eines taktilen Kraftmodells für den taktilen Kraftsensor, das zumindest teilweise auf der geschätzten Kraft und dem Signal basiert, und bevorzugt,
Empfangen eines zweiten Signals von dem Kraftsensor (114, 116, 118, 120, 122, 200, 502, 614, 706); und
Verwenden des taktilen Kraftmodells zur Schätzung des Kraftaufwands, der durch das zweite Signal dargestellt wird.

**12.** Ein oder mehrere nichtflüchtige computerlesbare Speichermedien, auf denen ausführbare Anweisungen gespeichert sind, die infolge der Ausführung durch einen oder mehrere Prozessoren (1302) eines Computersystems (1300) das Computersystem (1300) zumindest veranlassen zum:

Empfangen (906) eines Signals von einem taktilen Kraftsensor, das als Reaktion auf eine auf ein Objekt (702) ausgeübte Kraft erzeugt wird;
Empfangen eines Videos des Objekts (702);
Bestimmen der Bewegung des Objekts (702) zumindest teilweise basierend auf dem Video;
Schätzen einer Kraft auf die Sonde basierend auf der Bewegung des Objekts (702) und einem physikalischen Modell des Objekts (702);

Trainieren (912) eines taktilen Kraftmodells unter Verwendung des Signals und der geschätzten Kraft; und
Verwenden des taktilen Kraftmodells zur Bestimmung einer Kraft auf den taktilen Kraftsensor.

**13.** Ein oder mehrere nichtflüchtige computerlesbare Speichermedien nach Anspruch 12, wobei:

der Satz von Signalen von einem Satz von Elektroden auf dem taktilen Kraftsensor erfasst wird; und
der Satz von Signalen als ein erstes Voxelgitter (408) gespeichert wird.

**14.** Ein oder mehrere nichtflüchtige computerlesbare Speichermedien nach Anspruch 13, wobei:

ein Kontaktpunkt (406) auf dem taktilen Kraftsensor in einem zweiten Voxelgitter (412) gespeichert wird; und das erste Voxelgitter (408) und das zweite Voxelgitter (412) verkettet sind und zwei Schichten von 3D-Faltungen (418, 420) durchlaufen, und bevorzugt

Merkmale der 3D-Faltungen (418, 420) abgeflacht werden und eine Schicht von 2D-Faltungen (422) durchlaufen; und

Merkmale der 2D-Faltungen zu einem Vektor (424) abgeflacht werden, der zur Schätzung der zweiten Kraft verwendet wird.

15. Ein oder mehrere nichtflüchtige computerlesbare Speichermedien nach einem der Ansprüche 12 bis 14, wobei die ausführbaren Anweisungen das Computersystem weiter veranlassen zum:

Validieren einer durch das taktile Kraftmodell erzeugten Kraftgröße durch Durchführen einer Aufgabe zum Ergreifen eines verformbaren Objekts; und

Validieren einer durch das taktile Kraftmodell erzeugten Kraftvektorrichtung durch Auflegen eines verformbaren Objekts auf einer ebenen Oberfläche.

16. Nichtflüchtiges computerlesbares Speichermedium nach einem der Ansprüche 12 bis 15, wobei:

der taktile Kraftsensor eine Vielzahl von Kraftmessungen von einer Vielzahl von verschiedenen Punkten auf einer Oberfläche des Sensors bereitstellt; und

der taktile Kraftsensor Informationen bereitstellt, die eine Stelle auf der Oberfläche des Sensors für jede Kraftmessung der Vielzahl von Kraftmessungen erkennt.

17. Nichtflüchtiges computerlesbares Speichermedium nach einem der Ansprüche 12 bis 16, wobei die ausführbaren Anweisungen das Computersystem weiter veranlassen zum:

Veranlassen eines Roboters, der mit einem oder mehreren taktilen Kraftsensoren ausgestattet ist, ein Objekt (702) zu manipulieren;

Empfangen eines Signals von dem einen oder den mehreren taktilen Kraftsensoren; und

Bestimmen einer Kraft auf das Objekt (702) unter Verwendung des taktilen Kraftmodells und des Signals, und bevorzugt Veranlassen des Roboters, die Manipulation des Objekts (702) zumindest teilweise basierend auf der bestimmten Kraft anzupassen.

**Revendications**

1. Procédé, comprenant :

la manipulation (904) d'un objet (702) avec une sonde qui est équipée d'un capteur de force (114, 116, 118, 120, 122, 200, 502, 614, 706) ;

la réception (906) d'un signal provenant du capteur de force (114, 116, 118, 120, 122, 200, 502, 614, 706) ;

la réception d'une vidéo de l'objet (702) ;

la détermination du mouvement de l'objet (702) sur la base au moins en partie de la vidéo ;

l'estimation (910) d'une force exercée sur la sonde sur la base du mouvement de l'objet (702) et d'un modèle physique de l'objet (702) ;

l'entraînement (912) d'un modèle de force tactile pour le capteur de force (114, 116, 118, 120, 122, 200, 502, 614, 706) en utilisant le signal et la force estimée ; et

la détermination d'une force sur la sonde en utilisant le modèle de force tactile.

2. Procédé selon la revendication 1, dans lequel :

l'objet (702) est manipulé en poussant l'objet (702) sur une surface plane ; et

le modèle physique de l'objet (702) inclut la masse de l'objet (702) et une mesure du frottement entre l'objet (702) et la surface plane.

3. Procédé selon l'une quelconque des revendications précédentes, dans lequel :

le mouvement de l'objet (702) inclut une composante linéaire et une composante angulaire ; et

la force exercée sur la sonde est déterminée comme étant un vecteur parallèle à la surface plane.

4. Procédé selon l'une quelconque des revendications précédentes, dans lequel :

le signal inclut une pluralité de signaux d'électrode voxélisés (404) ; et
un point de contact (406) sur le capteur de force est déterminé sur la base, au moins en partie, des signaux d'électrode voxélisés (404).

5. Procédé selon l'une quelconque des revendications précédentes, dans lequel :

la force estimée est basée au moins en partie sur une fonction de perte ; et
la fonction de perte est fonction d'une distance angulaire entre une force transmise à l'objet (702) et une normale de surface (302) de l'objet (702) au niveau d'un point de contact.

6. Procédé selon l'une quelconque des revendications précédentes, comprenant en outre :

la collecte de données de force résultant de l'exécution de tâches de poussée planaire, de manipulation de balle et de pression d'objets rigides ;
l'utilisation des données de force pour générer le modèle de force tactile ; et
l'utilisation du modèle de force tactile pour estimer une force sur le capteur de force (114, 116, 118, 120, 122, 200, 502, 614, 706) produite lors de l'exécution d'une tâche différente.

7. Système (1300), comprenant :

un ou plusieurs processeurs (1302) ; et
une mémoire (1304) pour stocker des instructions exécutables par ordinateur qui, si elles sont exécutées, amènent les un ou plusieurs processeurs (1302) à :

recevoir (906), d'un capteur de force (114, 116, 118, 120, 122, 200, 502, 614, 706), un signal généré en réponse à une force exercée sur un objet (702) ;
recevoir une vidéo de l'objet (702) ; et
déterminer le mouvement de l'objet (702) sur la base au moins en partie de la vidéo ;
générer (910) une estimation de la force exercée sur l'objet (702) sur la base du mouvement de l'objet (702) et d'un modèle physique de l'objet (702) ;
entraîner un réseau neuronal en utilisant le signal et l'estimation de la force ; et
utiliser le réseau neuronal entraîné pour convertir un signal provenant d'un second capteur de force tactile (116) en une estimation de force.

8. Système (1300) selon la revendication 7, dans lequel l'estimation de force inclut une ampleur de force et une direction de force par rapport à l'orientation du second capteur de force tactile (116).

9. Système (1300) selon l'une quelconque des revendications 7 à 8, dans lequel :

l'objet (702) est un objet rectangulaire ; et
le mouvement de l'objet (702) inclut un mouvement plan le long d'une surface et un mouvement angulaire de l'objet (702).

10. Système (1300) selon l'une quelconque des revendications 7 à 9, dans lequel l'estimation de la force est déterminée en résolvant une minimisation des moindres carrés de l'accélération linéaire et de l'accélération angulaire de l'objet (702).

11. Système (1300) selon l'une quelconque des revendications 7 à 10, dans lequel les instructions exécutables par ordinateur qui, si elles sont exécutées, amènent les un ou plusieurs processeurs (1302) à, en outre :

déterminer un modèle de force tactile pour le capteur de force tactile sur la base au moins en partie de la force estimée et du signal et de préférence,
recevoir un second signal provenant du capteur de force (114, 116, 118, 120, 122, 200, 502, 614, 706) ; et
utiliser le modèle de force tactile pour estimer une quantité de force représentée par le second signal.

**12.** Support(s) de stockage non transitoire(s) lisible(s) par ordinateur présentant, stockées sur celui-ci(ceux-ci), des instructions exécutables qui, après avoir été exécutées par un ou plusieurs processeurs (1302) d'un système informatique (1300), amènent le système informatique (1300) à au moins :

recevoir (906), d'un capteur de force tactile, un signal généré en réponse à une force exercée sur un objet (702) ;
recevoir une vidéo de l'objet (702) ;
déterminer le mouvement de l'objet (702) sur la base au moins en partie de la vidéo ;
estimer une force exercée sur la sonde sur la base du mouvement de l'objet (702) et d'un modèle physique de l'objet (702) ;

entraîner (912) un modèle de force tactile en utilisant le signal et la force estimée ; et
utiliser le modèle de force tactile pour déterminer une force sur le capteur de force tactile.

**13.** Support(s) de stockage non transitoire(s) lisible(s) par ordinateur selon la revendication 12, dans le(s)quel(s) :

l'ensemble de signaux est collecté à partir d'un ensemble d'électrodes sur le capteur de force tactile ; et
l'ensemble de signaux est stocké sous la forme d'une première grille de voxels (408).

**14.** Support(s) de stockage non transitoire(s) lisible(s) par ordinateur selon la revendication 13, dans le(s)quel(s) :

un point de contact (406) sur le capteur de force tactile est stocké dans une seconde grille de voxels (412) ; et
la première grille de voxels (408) et la seconde grille de voxels (412) sont concaténées et traversent deux couches de convolutions 3D (418, 420), et de préférence
les caractéristiques des convolutions 3D (418, 420) sont aplaties et traversent une couche de convolutions 2D (422) ; et
les caractéristiques des convolutions 2D sont aplaties en un vecteur (424) qui est utilisé pour estimer la seconde force.

**15.** Support(s) de stockage non transitoire(s) lisible(s) par ordinateur selon l'une quelconque des revendications 12 à 14, dans le(s)quel(s) les instructions exécutables amènent en outre le système informatique à :

valider une amplitude de force produite par le modèle de force tactile en effectuant une tâche de saisie d'un objet déformable ; et
valider une direction de vecteur de force produite par le modèle de force tactile en plaçant un objet déformable sur une surface plane.

**16.** Support de stockage non transitoire lisible par ordinateur selon l'une quelconque des revendications 12 à 15, dans lequel :

le capteur de force tactile fournit une pluralité de mesures de force à partir d'une pluralité de points différents sur une surface du capteur ; et
le capteur de force tactile fournit des informations qui identifient un emplacement sur la surface du capteur pour chaque mesure de force de la pluralité de mesures de force.

**17.** Support de stockage non transitoire lisible par ordinateur selon l'une quelconque des revendications 12 à 16, dans lequel les instructions exécutables amènent en outre le système informatique à :

amener un robot équipé d'un ou plusieurs capteurs de force tactile à manipuler un objet (702) ;
recevoir un signal provenant des un ou plusieurs capteurs de force tactile ; et
déterminer une force sur l'objet (702) en utilisant le modèle de force tactile et le signal,
et de préférence amener le robot à ajuster la manipulation de l'objet (702) sur la base au moins en partie de la force déterminée.

**FIG. 1**

EP 3 712 584 B1

FIG. 2

EP 3 712 584 B1

```
                    ┌─────────────────┐                    ┌─────────────────┐
                    │   Voxelization  │───────────────────▶│    Force NN     │─────▶ 3-D Force
                    │       304       │                    │      310        │      Prediction
                    └─────────────────┘                    └─────────────────┘
                 ▲                                                   │
                 │                                                   ▼
Tactile Sensor ──┤                  Surface Normal         ┌─────────────────┐
   Signals       │  ┌─────────────────┐  Regularization    │  Loss Function  │
                 │  │ Surface Normal at│──────────────────▶│      308        │
                 └─▶│  Contact Point   │                    └─────────────────┘
                    │       302        │                             ▲
                    └─────────────────┘                             │
                                                           ┌─────────────────┐
Ground Truth Data ────────────────────────────────────────▶│Ground Truth Force│
   Collection                                              │      306        │
                                                           └─────────────────┘
```

# FIG. 3

**FIG. 4**

500

512
504
510
502
506
508

**FIG. 5**

FIG. 6

710 706

702

708

Movement

704

EP 3 712 584 B1

**FIG. 7**

800

Install Tactile Sensor in a Test Fixture — 802

Apply Force to the Tactile Sensor — 804

Receive the Force Signal from the Tactile Sensor — 806

Measure the Force Applied with the Test Fixture — 808

Train a Tactile Force Model using the Signal and the Measured Force — 810

Training Complete? — 812

Yes

No

Receive a Signal from the Tactile Sensor — 814

Use the Tactile Force Model to Estimate the Force on the Tactile Sensor — 816

**FIG. 8**

900

```
┌──────────────────────────────────────────┐
│ Establish a Physical Model for an          │
│ Environment that includes an Object        │──── 902
└──────────────────────────────────────────┘
                    │
                    ▼
┌──────────────────────────────────────────┐
│ Manipulate the Object with a Tactile Sensor │──── 904
└──────────────────────────────────────────┘
                    │
                    ▼
┌──────────────────────────────────────────┐
│ Receive a Signal from the Tactile Sensor    │
│ as a result of the Manipulation            │──── 906
└──────────────────────────────────────────┘
                    │
                    ▼
┌──────────────────────────────────────────┐
│ Measure the Motion of the Object           │──── 908
└──────────────────────────────────────────┘
                    │
                    ▼
┌──────────────────────────────────────────┐
│ Estimate the Force on the Object based on   │
│ the Motion of the Object and the Physical   │──── 910
│ Model                                       │
└──────────────────────────────────────────┘
                    │
                    ▼
┌──────────────────────────────────────────┐
│ Train a Tactile Force Model using the       │
│ Signal and the Estimated Force             │──── 912
└──────────────────────────────────────────┘
```

# FIG. 9

Parallel Processing Unit (PPU) 1000

Interconnect

1002

I/O Unit
1006

Front End Unit
1010

GPU Interconnect

1008

Hub
1016

Scheduler Unit
1012

Work Distribution Unit
1014

GPC(X)
1018

1020

XBar

Memory
(Y)
1004

Memory Partition Unit (U)
1022

**FIG. 10**

To/From Xbar

**General Processing Cluster (GPC) 1100**

Pipeline Manager
1102

PROP
1104

MPC
1110

Primitive
Engine
1112

SM
1114

DPC(V)
1106

Raster Engine
1108

WDX
1116

MMU 1118

To/From Xbar

To/From Xbar

# FIG. 11

Streaming Multiprocessor 1200

Instruction Cache
1202

Scheduler Unit (K)1204

Dispatch
1206

Register File
1208

Core
(L-1)
1210

SFU
(M-1)
1212

LSU
(N-1)
1214

Interconnect Network
1216

Shared Memory/L1 Cache
1218

FIG. 12

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019032814 A1

**Non-patent literature cited in the description**

- **COSTANZO M ; DE MARIA G ; NATALE C ; PIRO-ZZI S.** Design and calibration of a force/tactile sensor for dexterous manipulation. *Sensors,* 25 February 2019, vol. 19 (4), 966